# EUROPEAN PATENT APPLICATION

(11) **EP 3 176 404 A1**
(43) Date of publication of application: **07.06.2017**
(21) Application number: 15841544.8
(22) Date of filing: 17.09.2015
(51) Int. Cl.: F02B 39/00, F01D 25/16

(54) **BEARING MECHANISM FOR TURBOCHARGER**

(30) Priority: 18.09.2014 JP 2014190131; 12.12.2014 JP 2014252155; 12.12.2014 JP 2014252158; 19.08.2015 JP 2015162246
(71) Applicant: OTICS Corporation, Nishio-shi, Aichi 444-0392 (JP)
(72) Inventor: ISOGAI, Tomoyuki, Nishio-city Aichi 444-0392 (JP)
(74) Representative: Kramer Barske Schmidtchen Patentanwälte PartG mbB
(86) International application number: PCT/JP2015/076575
(87) International publication number: WO 2016/043293

(57) **Abstract**

An object of the present invention is to provide a bearing structure of a turbocharger (1) that can prevent generation of unusual noise and a decrease in operation efficiency and that can reduce manufacturing costs. The bearing structure of a turbocharger (1) to accomplish such an object, includes a rotor shaft (10), a ball bearing (20), a retainer (60), and a housing (30). The rotor shaft (10) is provided with a turbine impeller (1) mounted on a first end (10a) and a compressor impeller (12) mounted on a second end (10b).
The ball bearing (20) includes an inner ring (21) and an outer ring (22) that are supported in relatively rotatable manner. The retainer (60) holds the outer ring (22). Between the inner ring (21) and an outer peripheral surface (10c) of the rotor shaft (10), oil in a film state is interposed to form an oil film damper (50).

## Description

### TECHNICAL FIELD

The present invention relates to a bearing structure of a turbocharger.

### BACKGROUND ART

An internal combustion engine has been conventionally provided with a turbocharger which utilizes a flow of exhaust gas discharged from the internal combustion engine to compress intake air. The turbocharger includes a rotor shaft, a turbine impeller provided at one end of the rotor shaft, and a compressor impeller provided at the other end of the rotor shaft, and the rotor shaft is borne by a bearing structure. The bearing structure is housed in a bearing housing. Patent Literature 1 discloses a turbocharger that includes, as such a bearing structure, a bearing structure that has a ball bearing mounted on a rotor shaft and an oil film damper formed by filling the space between the ball bearing and a bearing housing with lubricant oil.

In the configuration disclosed in Patent Literature 1, the ball bearing includes an annular inner ring, an annular outer ring, and a ball interposed between the inner ring and the outer ring so as to rotate the inner ring and the outer ring rotate in relatively rotatable manner. The rotor shaft is fitted into the inner ring. A rotation body assembly is thus constituted so that the rotor shaft, the impellers provided at the ends of the rotor shaft, and the inner ring of the ball bearing can integrally rotate. An oil film damper is formed between the outer ring of the ball bearing and the bearing housing by filling the space therebetween with oil, and the oil film damper is configured to exhibit a damping effect of suppressing vibration of the rotation body assembly.

### PRIOR ART DOCUMENT

### Patent Literature

Patent Literature 1 JP-A-2012-92934

### SUMMARY OF THE INVENTION

### PROBLEM TO BE SOLVED BY THE INVENTION

According to the configuration described above, an oil film damper is formed between an outer ring of a ball bearing and a bearing housing. Therefore, all the components inside the oil film damper include not only a rotor shaft and impellers but also the ball bearing, and thus the mass of all the components inside the oil film damper is relatively large. The outer diameter of the outer ring of the ball bearing is much larger than the inner diameter of an inner ring, and thus the contact area of the oil film damper and the outer ring of the ball bearing is relatively large. As a result, viscous force between the oil film damper and the outer ring tends to be large and, especially under low temperature environment, viscosity increases significantly.

Meanwhile, residual unbalance (disproportion) is always present in a rotation body assembly in not a small amount, and thus a center of mass of the rotation body assembly in a radial direction is positioned at a position shifted from a shaft center (centroid) of the rotor shaft. For this reason, during axial rotation of the rotation body assembly, the rotation body assembly tends to rotate eccentrically about an axis passing through the center of mass shifted from the shaft center of the rotor shaft. When the (inertial) mass of the components inside the oil film damper is large and the viscous force is high, however, the eccentric rotation of the rotation body assembly is hindered and thus the rotation body assembly has to rotate about a position close to the centroid. Further, each of the impellers at both ends of the rotor shaft is in a state of a cantilever. In such a case, the impellers whirl with rotation of the rotor shaft. As a result, unusual noise may be generated during initial rotation or the impellers may contact the housing and be damaged. These problems are more serious under low temperature environment. To prevent damage of the impellers, a clearance between each impeller and the housing (a tip clearance) needs to be increased. The increased tip clearance, however, decreases in operation efficiency of a turbocharger.

As one proposal to prevent generation of such unusual noise and such a decrease in operation efficiency, it is conceivable to adjust the mass balance of the rotation body assembly so that a shift of the center of mass of the rotation body assembly from the shaft center of the rotor shaft is minimized, in order not to hinder the eccentric rotation of the rotation body assembly. In this configuration, however, the mass balance needs to be adjusted with high accuracy, which results in cost increase.

The present invention has been achieved under such a background to provide a bearing structure of a turbocharger that can prevent generation of unusual noise and a decrease in operation efficiency and that can reduce manufacturing costs.

### MEANS FOR SOLVING THE PROBLEM

One aspect of the present invention provides a bearing structure of a turbocharger, which includes a rotor shaft that includes a turbine impeller mounted on a first end thereof and a compressor impeller mounted on a second end thereof, a ball bearing that includes an inner ring and an outer ring that are supported in relatively rotatable manner, a retainer that holds the outer ring, a housing that houses the rotor shaft, the ball bearing, and the retainer, and an oil film damper that is formed of oil in a film state and is interposed between the inner ring and an outer peripheral surface of the rotor shaft.

### EFFECTS OF THE INVENTION

In the bearing structure of a turbocharger as described above, the oil film damper is formed between the inner ring of the ball bearing and the rotor shaft. Components inside the oil film damper include only the inner ring in the ball bearing, and do not include other parts other than the inner ring and the retainer, accordingly. Consequently, the (inertial) mass of the components inside the oil film damper is relatively small. Further, the inner diameter of the inner ring of the ball bearing is much smaller than the outer diameter of the outer ring, and thus the contact area of the oil film damper and the outer peripheral surface of the rotor shaft is relatively small. For this reason, viscous force between the oil film damper and the outer peripheral surface of the rotor shaft can be relatively reduced.

Reduction of the viscous force reduces inhibition force to hinder the rotation of a rotation body assembly about a center of mass. Further, since the (inertial) mass of the components inside the oil film damper is relatively small, the rotation body assembly easily rotates eccentrically. As a result, during rotation of the rotor shaft, the impellers at both ends of the rotor shaft are prevented from largely whirling, which enables to prevent generation of unusual noise. Further, a chip clearance between each of the impellers and the housing is optimized to improve operation efficiency. In addition, since the rotation body assembly easily rotates eccentrically as described above, not so high accuracy is required to adjust the mass balance of the rotation body assembly. Such easy adjustment of the mass balance reduces manufacturing costs.

As described above, because the viscous force between the oil film damper and the outer peripheral surface of the rotor shaft can be relatively reduced, an improvement in rotation response of the rotation body assembly can be expected so as to contribute to an improvement in transient performance of an internal combustion engine.

Even when the viscosity of oil tends to be high, e.g. under low temperature environment, the reduction of the viscous force enables to sufficiently bring about an oil damping effect on the rotation body assembly.

According to the present invention, it is possible to provide a bearing structure of a turbocharger that can prevent generation of unusual noise and a decrease in operation efficiency and that can reduce manufacturing costs.

### BRIEF DESCRIPTION OF DRAWINGS

FIG. 1 is a cross-sectional schematic view of a bearing structure of a turbocharger according to Embodiment 1.
FIG. 2 is a partially enlarged cross-sectional view taken along a line II-II in FIG. 1.
FIG.3 is an enlarged view of the vicinity of an oil film damper in a state where a rotation body assembly rotates by 45° from a state shown in FIG. 1.
FIG. 4 is a cross-sectional schematic view of a turbocharger bearing structure according to Embodiment 2.
FIG. 5 is an enlarged view of the vicinity of an oil film damper shown in FIG. 4.
FIG. 6 is a partially enlarged cross-sectional view taken along a line III-III in FIG. 4.
FIG. 7 is a partially enlarged cross-sectional view taken along a line IV-IV in Fig. 5.
FIG. 8 is a perspective view of an axial-direction end part of an inner ring according to Embodiment 2.
FIG. 9 is an enlarged view of the vicinity of an oil film damper according to Embodiment 3.
FIG. 10 is a perspective view of an annular member according to Embodiment 3.
FIG. 11 is a cross-sectional schematic view of a bearing structure of a turbocharger according to Embodiment 4.
FIG. 12 is a perspective view of an annular member according to Embodiment 4.
FIG. 13 is a partially enlarged cross-sectional view, according to Embodiment 4, taken along a line corresponding to the line IV-IV in Fig. 5 that shows Embodiment 1.
FIG. 14 is a perspective view of an axial-direction end part of an inner ring according to Embodiment 4.
FIG. 15 is a cross-sectional schematic view of a bearing structure of a turbocharger according to Embodiment 5.
FIG. 16 is an enlarged view of the vicinity of an oil film damper shown in Fig. 15.
FIG. 17 is a partially enlarged cross-sectional view taken along a line III-III in Fig. 15.
FIG. 18 is a perspective view of an axial-direction end part of an inner ring according to Embodiment 5.
FIG. 19 is an enlarged cross-sectional schematic view of the vicinity of an oil film damper according to Modification 1.
FIG. 20 is an enlarged cross-sectional schematic view of the vicinity of an oil film damper according to Modification 2.
FIG. 21 is a cross-sectional schematic view of a bearing structure of a turbocharger according to Embodiment 6.
FIG. 22 is an enlarged view of the vicinity of an oil film damper shown in Fig. 21.
FIG. 23 is a partially enlarged cross-sectional view taken along a line III-III of Fig. 21.

### MODE FOR CARRYING OUT THE INVENTION

The inner ring can be configured to engage with the rotor shaft via an engagement member. In this case, the inner ring can reliably rotate with rotation of the rotor shaft via the engagement member.

The inner ring can be configured to include an oil supply hole formed as a through-hole, through which at least a part of the oil is supplied to the oil film damper. In this case, the oil can be easily supplied to the oil film damper with such a simple configuration.

In the bearing structure of a turbocharger, if screw hole machining is performed on the rotor shaft to mount a ball bearing thereon, adjustment of the mass balance of the rotation body assembly needs more time and effort, which may result in cost increase. Further, if screw hole machining is performed on the rotor shaft, the screw hole concentratedly suffers stress, which may cause a decrease in fatigue strength of the rotor shaft. In such a case, as one proposal to compensate for such a decrease in fatigue strength, it is conceivable to prepare the rotor shaft with a large diameter to secure sufficient fatigue strength. However, the large diameter of the rotor shaft needs to increase the size of a ball bearing. Thus, the contact area of the oil film damper and the ball bearing increases and the viscous force between the oil film damper and the ball bearing also increases, which decreases the operation efficiency of the turbocharger. Moreover, such problem that a high-speed rotation of the rotor shaft easily unfastens a screw directly fastened to the rotor shaft may occur.

The inner ring may be formed in a cylindrical shape extending along an axial direction of the rotor shaft, the rotor shaft may be provided with an end-part opposing part that is opposed to an axial-direction end part of the inner ring in an axial direction, and a first one of the axial-direction end part and the end-part opposing part may have a protrusion that protrudes toward a second one of the axial-direction end part and the end-part opposing part, and the second one may have an engagement part that engages with the protrusion. In this case, the axial-direction end part of the inner ring engages with the end-part opposing part provided in the rotor shaft via the protruding part and the engagement part, and thus the inner ring rotates with rotation of the rotor shaft. The end-part opposing part opposes the axial-direction end part in the axial direction, and thus the protruding part engages with the engagement part in the axial direction. Therefore, the inner ring can be engaged with the rotor shaft with no need to attach a screw and the like to the rotor shaft in a direction crossing the axial direction. For this reason, screw hole machining on the rotor shaft needs not be performed, and thus the mass balance of the rotation body assembly is easily adjusted and manufacturing costs can be reduced.

The end-part opposing part may include a turbine-side end-part opposing part opposed to the axial-direction end part on a side of a turbine impeller and a compressor-side end-part opposing part opposed to the axial-direction end part on a side of a compressor impeller, the turbine-side end-part opposing part may be formed in a joining part of the rotor shaft to be joined with the turbine impeller, and the compressor-side end-part opposing part may be formed in a collar provided on the side of the compressor impeller. In this case, no additional member is required to provide the end-part opposing part, and thus manufacturing costs can be reduced.

At least one of the joining part of the rotor shaft joined with the turbine impeller, and the collar may be provided with a plurality of oil slingers formed in a recessed shape so as to radially outwardly scatter oil flowing out of the oil film damper, and the protrusion may engage with the oil slinger in at least one of the oil slingers to constitute the engagement part. In this case, the oil slinger can be used as the engagement part, and thus neither additional member nor additional machining is required, so that manufacturing costs can be reduced.

The rotor shaft may include a large diameter part formed on the side of the turbine shaft, a small diameter part formed on the side of the compressor impeller and having a diameter smaller than that of the large diameter part, and a stepped part formed between the large diameter part and the small diameter part, and may be provided with an annular member into which the small diameter part is inserted. The annular member may be interposed between the stepped part and the collar provided on the side of the compressor impeller and may have the end-part opposing part formed at a position on the side of the compressor. In this case, as the annular member is provided separately from the collar, machining for forming the engagement part or the protruding part can be easily performed and the engagement part or the protruding member can be formed with such a simple configuration, so that manufacturing costs can be reduced.

The inner ring can be configured to rotate with rotation of the rotor shaft via the oil film damper. Specifically friction in the oil film damper (that is, friction between the inner ring of the ball bearing and the rotor shaft) is larger than friction in the ball bearing (that is, friction between the inner ring and the outer ring). For this reason, when the rotor shaft rotates, relative rotation occurs between the inner ring and the outer ring in the ball bearing, and thus relative rotation between the inner ring and the rotor shaft is suppressed in the oil film damper, so that the inner ring can rotate with the rotation of the rotor shaft only via the oil film damper even though small slip (relative rotation between the inner ring and the rotor shaft) occurs. Consequently, no additional structure is required separately to engage the inner ring with the rotor shaft so that the inner ring rotates with the rotor shaft. For example, screw hole machining on the rotor shaft need not be performed to engage the rotor shaft with the inner ring. Machining on an end part of the inner ring need not be performed to engage the end part of the inner ring with the oil slinger. Further, machining on the end part of the inner ring and the collar need not be performed to engage the end part of the inner ring with the collar. Therefore, machining costs are eliminated, and adjustment of the mass balance of the rotation body assembly is made easily, so that large cost reduction in manufacturing can be expected.

The rotor shaft need not be subjected to screw hole machining, and thus, fatigue strength of the rotor shaft is improved as compared to a case where screw hole machining is performed on the rotor shaft. The improvement of fatigue strength eliminates the necessity to increase the diameter of the rotor shaft. As a result, the ball bearing can be downsized and the contact area of the oil film damper and the ball bearing can be reduced. Consequently, the viscous force between the oil film damper and the ball bearing can be reduced and the operation efficiency of a turbocharger can be improved. Further, loosening of a screw that might be caused by high speed rotation of the rotor shaft need not be considered.

It is preferable that the inner ring is formed in a cylindrical shape extending along an axial direction of the rotor shaft, the rotor shaft is provided with an end-part opposing part that is opposed to an axial-direction end part of the inner ring in an axial direction, and at least one of the axial-direction end part and the end-part opposing part is provided with an oil discharge groove formed by cutting away so as to discharge oil discharged from the oil film damper. Such configuration enables to easily discharge oil supplied to the oil film damper from the oil film damper through the oil discharge groove and to facilitate circulation of oil in the housing. The dischargeability of oil to be discharged from the oil film damper is improved and the suppliability of oil to be supplied to the oil film damper is also improved. Consequently, the oil is prevented from being filled in the housing and leaking outside of the housing.

To prevent generation of unusual noise and a decrease in operation efficiency in the bearing structure of a turbocharger, it is effective to suppress vibration of the rotation body assembly by a damping effect of the oil film damper. To reliably exhibit such a damping effect, the oil needs to have sufficiently high lubricity so that the oil reaches every part of the oil film damper.

The retainer is configured to include an oil supply path for flowing the oil, which is formed at an inclined angle to be closer to the oil film damper as approaching closer to the rotor shaft. The oil supply path may include an oil ejection port at an end part on a side of the inner ring, from which oil flowing in the oil supply path is ejected toward the inner ring. The inner ring may be formed in a cylindrical shape and include an ejection-port opposing part opposed to an ejection direction of oil to be ejected from the oil ejection port, and the ejection-port opposing part may have an oil flowing hole formed to flow oil ejected from the oil ejection port into an inside of the inner ring and supply the oil film damper with the oil. In this case, the oil supply path is formed at an inclined angle so as to be closer to the oil film damper as approaching closer to the rotor shaft. The inner ring is provided with the oil flowing hole in plural at the ejection-port opposing part opposed to an oil ejection direction at the oil ejection port of the oil supply path. Oil ejected through the oil supply path in a direction from the oil ejection port to the oil film damper flows into the inner ring through each of the oil flowing holes and is supplied to the oil film damper. As a result, oil ejected from the oil ejection port is positively supplied to the oil film damper and thus lubricity of oil in the oil film damper is improved. Consequently, a fully sufficient damping effect can be obtained, generation of unusual noise can be prevented, and operation efficiency can be improved.

The oil supply path may pass through the retainer straightway and a center line of the oil supply path may be perpendicular to the ejection-port opposing part. In this case, the oil flowing hole is open on a surface that is vertical to a direction that oil ejected from the oil ejection port flows, and thus, the oil ejected from the oil ejection port easily flows into the oil flowing hole. As a result, supply of oil to the oil film damper is facilitated, lubricity of the oil in the oil film damper is improved, and a fully sufficient damping effect can be obtained. Moreover, generation of unusual noise can be reliably prevented and operation efficiency can be further improved. The center line of the oil supply path is an imaginary line which passes through the center of the oil supply path and which is parallel to a direction in which the oil supply path passes in the retainer.

An angle between the center line of the oil supply path and a shaft center of the rotor shaft is preferably equal to or less than 45° and more preferably equal to or less than 30°. Such configuration enables to exhibit a wedge effect of flowing the oil ejected from the oil ejection port through oil supply path and positively charging the oil film damper formed inside an inner ring with the oil, and thus lubricity of the oil in the oil film damper is further improved. And a sufficient damping effect can be obtained. Moreover, generation of unusual noise can be reliably prevented and operation efficiency can be further improved.

The inner ring may be provided with a damper forming part that forms the oil film damper, and a storage-part forming part that forms an oil storage part for storing oil between the storage-part forming part and an outer peripheral surface of the rotor shaft, the storage-part forming part being formed between the damper forming part and the ejection-port opposing part, and a wall surface of the storage-part forming part on a side of the damper forming part may be formed to be parallel to a center line of the oil supply path in a cross-section including the shaft center of the rotor shaft and the center line. Such configuration enables to store the oil that is supplied to the oil storage part through the oil flowing hole, and to supply the oil stored in the oil storage part to the oil film damper along the wall surface on the side of the damper forming part using oil flowing into the oil storage part through the oil flowing hole. Thus, lubricity is improved and the wedge effect is exhibited. As a result, a sufficient damping effect can be obtained in the oil film damper, generation of unusual noise can be reliably prevented, and operation efficiency can be further improved.

The inner ring preferably includes a discharge-part forming part formed on the damper forming part on a side opposite to the oil storage part, the discharge-part forming part forming an oil discharge part for discharging oil supplied to the oil film damper, and an oil slinger is provided at a position opposite to the oil discharge part and scatters oil discharged from the oil discharge part, radially outside of the rotor shaft. Such configuration enables to easily discharge oil supplied to the oil film damper from the oil film damper through the oil discharge part and the oil slinger, and to facilitate circulation of oil in a bearing housing. The dischargeability of oil to be discharged from the oil film damper can be improved and the suppliability of oil to be supplied to the oil film damper can also be improved. As a result, the oil is prevented from being filled in the bearing housing and leaking outside of the bearing housing.

### EMBODIMENTS

### (Embodiment 1)

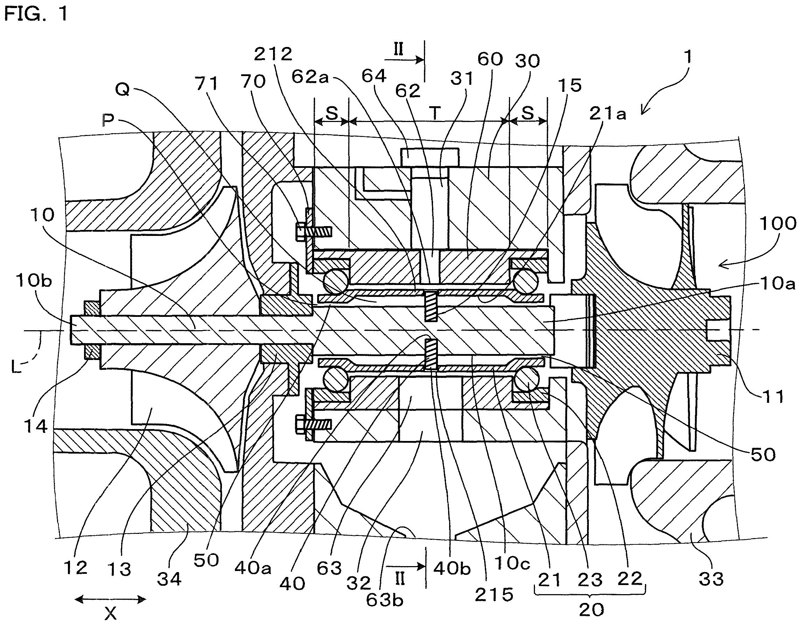

A bearing structure of a turbocharger 1 according to Embodiment 1 is described with reference to FIGs. 1 to 3.

The bearing structure of a turbocharger 1 according to the present embodiment includes a rotor shaft 10, a ball bearing 20, and a housing 30.

The rotor shaft 10 includes a turbine impeller 11 mounted on a first end 10a of and a compressor impeller 12 mounted on a second end 10b thereof.

The ball bearing 20 includes an inner ring 21 and an outer ring 22 that are supported in relatively rotatable manner. The inner ring 21 engages with the rotor shaft 10 via an engagement member 40.

The housing 30 houses therein the rotor shaft 10, the ball bearing 20, and the engagement member 40 to constitute a bearing housing.

The outer ring 22 is fixed to the housing 30 through the retainer 60. An oil film damper 50 filled up with oil is provided between the inner ring 21 and an outer peripheral surface 10c of the rotor shaft 10.

The bearing structure 1 according to the present example is described in detail below.

As shown in FIG. 1, the rotor shaft 10 is provided integrally with the turbine impeller 11 at the first end 10a. The turbine impeller 11 is housed in a turbine housing 33. On the other hand, the second end 10b of the rotor shaft 10 is inserted into a collar 13 and the compressor impeller 12, and a shaft end nut 14 prevents the collar 13 and the compressor impeller 12 from coming off. The compressor impeller 12 is housed in a compressor housing 34. The ball bearing 20 is provided between the turbine impeller 11 and the compressor impeller 12 both on the rotor shaft 10.

As shown in FIG. 1, the ball bearing 20 includes the inner ring 21 and the outer ring 22. The inner ring 21 is formed in a substantially cylindrical shape. The inner diameter of the inner ring 21 is a little larger than the outer diameter of the rotor shaft 10. Specifically, the inner diameter of areas S in the vicinity of both end parts of the inner ring 21 in an axial direction X is larger than the outer diameter of the rotor shaft 10 by approximately 0.05 to 0.1 mm. The inner diameter of an intermediate area T between end-part vicinity areas S is larger than the inner diameter of the end-part vicinity area S. The rotor shaft 10 is inserted into the inner ring 21. As the inner ring 21 has the shape described above, a clearance P is formed in each of the end-part vicinity areas S between the inner ring 21 and the rotor shaft 10, and a clearance Q that is larger than the clearance P is formed in the intermediate area T. The clearances P and Q have a certain size in a peripheral direction in a stationary state where the center of the inner ring 21 is aligned with the center of the rotor shaft 10.

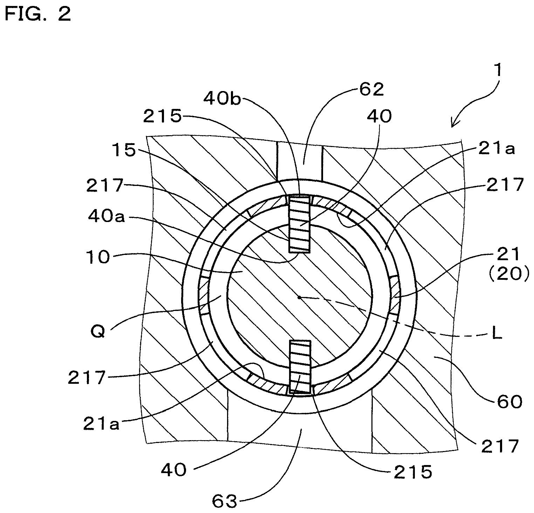

As shown in FIG. 2, a plurality of engagement member insertion holes 215 and a plurality of oil supply holes 217 are formed in a central area 212 of the inner ring 21 in the axial direction X, and these holes 215 and 217 are peripherally arranged. According to the present embodiment, the engagement member insertion hole 215 is provided at two positions that are symmetrical about an axle L of the rotor shaft 10, and the oil supply hole 217 is provided at four positions each of which is arranged between a pair of the engagement member insertion holes 215 and symmetrical about the axle of the rotor shaft 10. As shown in FIG. 2, the engagement member insertion hole 215 and the oil supply hole 217 are through-holes, and the opening diameter of the oil supply hole 217 is larger than the opening diameter of the engagement member insertion hole 215.

As shown in FIG. 2, the engagement member 40 formed of a bar-like member having a diameter slightly smaller than the diameter of the engagement member insertion hole 215 is inserted into the engagement member insertion hole 215. A thread groove is formed on at least a side surface of the engagement member 40 on a side of one end 40a, and the engagement member 40 is screwed into a screw hole 15 formed in the rotor shaft 10 to be mounted on the rotor shaft 10. A protruding end part 40b on a side of the other end of the engagement member 40 protrudes radially outside of the rotor shaft 10 to be positioned radially further outside than an inner side surface 21a of the inner ring 21. Accordingly, when the rotor shaft 10 rotates, a side surface of the engagement member 40 abuts against a side wall surface of the engagement member insertion hole 215, so that the rotor shaft 10 engages with the inner ring 21. As a result, the inner ring 21 rotates with rotation of the rotor shaft 10.

The outer ring 22 of the ball bearing 20 is formed in an annular shape. As shown in FIG. 1, two outer rings 22 are provided, and each of the outer rings 22 is arranged to oppose an outer peripheral surface of the inner ring 21 in each of the areas S in the vicinity of both end parts of the inner ring 21 in the axial direction X (a surface of the inner ring 21 opposite to a surface facing the rotor shaft 10). A ball rotator 23 is interposed via a holder (not shown) between the inner ring 21 and the outer ring 22. The inner ring 21 and the outer ring 22 are thus configured to be in relatively rotatable manner via the rotator 23 so as to constitute the ball bearing 20. The outer ring 22 is fixed in the housing 30 via the retainer 60, and the housing 30 bears the rotor shaft 10 via the ball bearing 20.

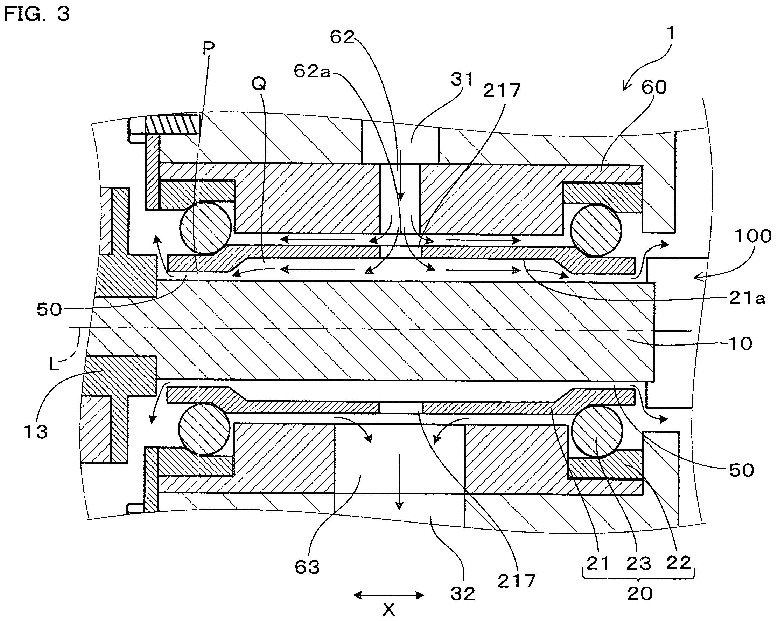

As shown in Fig. 1, an oil supply path 62 for supplying oil to around the ball bearing 20 and an oil discharge path 63 for discharging oil from around the ball bearing 20 are formed in the retainer 60. The oil supply path 62 in the retainer 60 is formed on the vertically upper side of the housing 30 and is provided with an oil ejection port 62a for ejecting oil to around the ball bearing 20. The oil ejection port 62a is formed at a position overlapping the oil supply hole 217 (see Fig. 3) formed in the inner ring 21 in the axial direction X. The oil discharge path 63 is formed on the vertically lower side of the housing 30, and an oil discharge port 63b that is open to outside of the housing 30 is formed below the oil discharge path 63.

The oil film damper 50 is formed in the clearance P between the inner ring 21 and the rotor shaft 10 in each of the end-part vicinity areas S in the vicinity of the both end parts of the inner ring 21. As shown in Fig. 3, the oil film damper 50 is formed in the following way. In a state where the oil supply hole 217 is positioned immediately below the oil ejection port 62a, a part of oil supplied from the oil supply path 62 formed in the retainer 60 enters between the inner ring 21 and the rotor shaft 10 through the oil supply hole 217, and reaches the clearance P through the clearance Q as indicated by arrows. Oil is successively supplied from the oil supply path 62 to the oil film damper 50, and the supplied oil is discharged from the both end parts of the inner ring 21 in the axial direction X.

The rotor shaft 10 is mounted on the housing 30 in the following way. First, the inner ring 21 of the ball bearing 20 is inserted into the retainer 60. The rotator 23 and the outer ring 22 are mounted on the retainer 60 from both end sides of the retainer 60 in the axial direction X so as to form the ball bearing 20. The ball bearing 20 and the retainer 60 are then inserted into the housing 30 and fixed in the housing 30 with a plate 70 and a bolt 71 so as to be fit into the housing 30. Then, the turbine impeller 12 and the rotor shaft 10 are inserted into the housing 30, and the collar 13 and the compressor impeller 11 are fixed by tightening the shaft end nut 14. Thereafter, one engagement member 40 is inserted from the oil supply path 62 of the retainer 60 into the screw hole 15 of the rotor shaft 10 through an upper hole 31 of the housing 30 and tightened into the screw hole 15 to be fixed. The other engagement member 40 is inserted from the oil discharge path 63 of the retainer 60 into the screw hole 15 of the rotor shaft 10 through a lower hole 32 of the housing 30 and tightened into the screw hole 15 to be fixed. Finally, a plug 64 is placed on the upper hole 31 of the housing 30 to close the upper hole 31.

Alternatively, after the one engagement member 40 inserted through the upper hole 31 of the housing 30 is fixed to the rotor shaft 10, the rotor shaft 10 (a rotation body assembly 100) may be rotated by 180° so that the screw hole 15 opposite to the screw hole 15 having the engagement member 40 mounted thereon is positioned immediately below the upper hole 31, and thus the other engagement member 40 is inserted through the upper hole 31 so as to be tightened into the screw hole 15.

According to the bearing structure of a turbocharger 1 of the present embodiment, the inner ring 21 engages with the rotor shaft 10 via the engagement member 40. The inner ring 21 accordingly can reliably rotate with rotation of the rotor shaft 10 via the engagement member 40. The oil film damper 50 is formed between the inner ring 21 of the ball bearing 20 and the rotor shaft 10 (in the clearance P). Thus the rotation body assembly 100 is constituted by the rotor shaft 10, the turbine impeller 11 and the compressor impeller 12 mounted on the rotor shaft 10, and the inner ring 21 that rotates with the rotor shaft 10, and does not include components of the ball bearing 20 other than the inner ring 21 (the outer ring 22, the rotator 23, the holder, and the like). For this reason, the mass of the rotation body assembly 100 is relatively small. The outer diameter of the rotor shaft 10 is much smaller than the outer diameter of the outer ring 22 of the ball bearing 20, and thus the contact area of the oil film damper 50 and the rotation body assembly 100 (the outer peripheral surface 10c of the rotor shaft 10) is relatively small. For these reasons, viscous force between the oil film damper 50 and the rotation body assembly 100 can be relatively reduced.

Reduction of the viscous force reduces inhibition force to hinder the eccentric rotation of the rotation body assembly 100, so that the rotation body assembly 100 easily rotates eccentrically only with low energy. As a result, during rotation of the rotor shaft 10, the impellers 11 and 12 at both ends of the rotor shaft 10 are prevented from largely whirling. Thus, generation of unusual noise can be prevented. Further, no need for a large chip clearance between the impeller 11 and the housing 33 or between the impeller 12 and the housing 34 enables to prevent a decrease in operation efficiency. When the compressor housing 34 includes an abradable seal, the compressor impeller 12 is prevented from excessively contacting the abradable seal, and thus damage of the compressor impeller 12 and excessive wear of the abradable seal are prevented. Moreover, as described above, since the rotation body assembly 100 easily rotates eccentrically, adjustment of the mass balance in the rotation body assembly 100 does not require so high accuracy. Thus, the mass balance is easily adjusted and manufacturing costs can be reduced.

As described above, the viscous force between the oil film damper 50 and the rotation body assembly 100 can be relatively reduced, and thus an improvement in rotation response of the rotation body assembly 100 can be expected, which contributes to an improvement in transient performance of an internal combustion engine.

The viscous force can be reduced even when the viscosity of oil tends to be high, e.g. under low temperature environment, and the reduction of the viscous force enables to effectively bring about an oil damping effect on the rotation body assembly 100.

According to the present embodiment, the inner ring 21 includes the oil supply hole 217 formed as a through-hole, and at least a part of oil is supplied between the inner ring 21 and the rotor shaft 10 (the clearance P) through the oil supply hole 217. Such simple configuration enables to easily supply oil to the clearance P so as to form the oil film damper 50.

While in this embodiment, the oil supply hole 217 is formed in the central area 212 of the inner ring 21 in the axial direction X, the present invention is not limited to such configuration. Alternatively, in addition to this oil supply hole 217, the oil supply hole 217 may be formed at plural different positions in the axial direction X.

According to the present embodiment, it is possible to provide the bearing structure of a turbocharger 1 that can prevent generation of unusual noise and a decrease in operation efficiency and that can reduce manufacturing costs.

### (Embodiment 2)

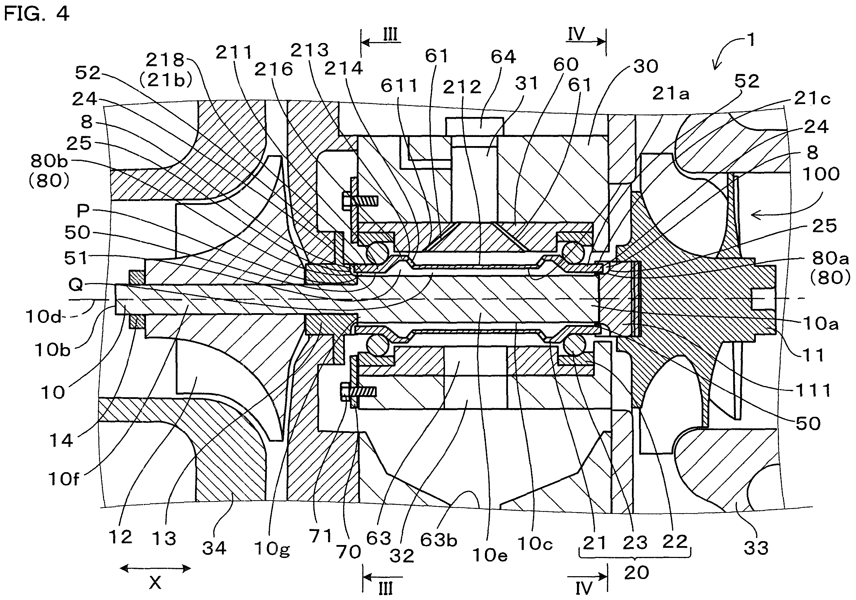

A bearing structure of a turbocharger 1 according to Embodiment 2 is described with reference to FIGs. 4 to 8.

As shown in FIG. 4, the bearing structure of a turbocharger 1 according to the present embodiment includes a rotor shaft 10, a ball bearing 20, a retainer 60, and a housing 30.

A turbine impeller 11 is mounted on a first end 10a of the rotor shaft 10 and a compressor impeller 12 is mounted on a second end 10b thereof.

The ball bearing 20 includes an inner ring 21 and an outer ring 22 that are supported in relatively rotatably manner.

The retainer 60 holds the outer ring 22.

The housing 30 houses therein the rotor shaft 10, the ball bearing 20, and the retainer 60 to constitute a bearing housing.

An oil film damper 50 is formed of oil in a film state and is interposed between the inner ring 21 and an outer peripheral surface 10c of the rotor shaft 10.

The inner ring 21 is formed in a cylindrical shape extending along an axial direction X of the rotor shaft 10.

The rotor shaft 10 is provided with end-part opposing parts 80 that are opposed to axial-direction end parts 21b and 21c of the inner ring 21 in the axial direction X.

First ones of the axial-direction end part 21b and 21c, and the end-part opposing parts 80 each include a protruding part 24 protruding toward second ones of the axial-direction end part 21b and 21c, and the end-part opposing parts 80, and the second ones each include an engagement part 25 with which the protruding part 24 engages.

The bearing structure of a turbocharger 1 according to the present embodiment will be described in detail below.

As shown in FIG. 4, the first end 10a of the rotor shaft 10 is provided with the turbine impeller 11 integrally mounted thereon. The turbine impeller 11 is housed in a turbine housing 33. On the other hand, the second end 10b of the rotor shaft 10 is inserted into a collar 13 and the compressor impeller 12, and a shaft end nut 14 prevents the collar 13 and the compressor impeller 12 from coming off and rotating. The compressor impeller 12 is housed in a compressor housing 34. The housing 30 provided as a bearing housing for the rotor shaft 10 is provided between the turbine housing 33 and the compressor housing 34.

As shown in FIG. 4, the ball bearing 20 that bears the rotor shaft 10 is held in the housing 30 via the retainer 60. An oil supply path 61 for supplying oil to around the ball bearing 20 and an oil discharge path 63 for discharging oil from around the ball bearing 20 are formed in the retainer 60.

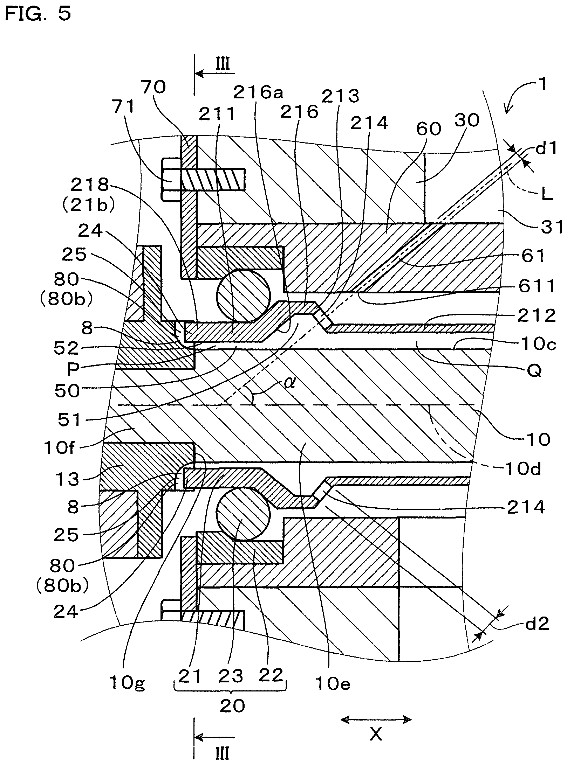

As shown in FIG. 5, the oil supply path 61 is formed at an inclined angle and is closer to the oil film damper 50 as approaching closer to the rotor shaft 10. In the present embodiment, the oil supply path 61 passes through the retainer 60 straightway. Accordingly, a center line L that is an imaginary line which passes through the center of the oil supply path 61 and which is parallel to a direction in which the oil supply path 61 passes in the retainer 60 is linear. At an exit of the oil supply path 61 (an end part of the oil supply path 61 on a side of the inner ring 21), an oil ejection port 611 that is open to eject oil flowing in the oil supply path 61 to the inner ring 21 is formed. According to the present embodiment, the oil supply paths 61 are formed at two positions to supply oil to each the respective oil film dampers 50 formed at both ends in the axial direction X. The oil discharge path 63 is formed on the vertically lower side of the housing 30, and an oil discharge port 63b that is open to outside of the housing 30 is formed below the oil discharge path 63. An auxiliary oil supply path extending perpendicularly to the axial direction X may be formed between the two oil supply paths 61.

As shown in FIG. 5, the center line L of the oil supply path 61 is inclined with respect to a shaft center 10d of the rotor shaft 10. An angle α of the center line L and the shaft center 10d is preferably equal to or less than 45° and more preferably equal to or less than 30°. In the present embodiment, the angle α is 30°.

As shown in FIG. 4, the ball bearing 20 includes the inner ring 21 and the outer ring 22. The inner ring 21 is formed in a substantially cylindrical shape. A damper forming part 211 is formed in end-part areas of the inner ring 21 in the axial direction X to form the oil film damper 50 between the damper forming part 211 and the outer peripheral surface 10c of the rotor shaft 10. In the present embodiment, the inner diameter of the damper forming part 211 is larger than the outer diameter of the rotor shaft 10 by approximately 0.05 to 0.1 mm.

The inner diameter of a central area 212 of the inner ring 21 in the axial direction X is larger than the inner diameter of the damper forming part 211. In the present embodiment, the inner diameter of the central area 212 is larger than the outer diameter of the rotor shaft 10 by approximately 0.2 mm or more. Accordingly, a clearance Q between the inner ring 21 in the central area 212 and the outer peripheral surface 10c of the rotor shaft 10 is twice or more larger than a clearance P between the damper forming part 211 and the outer peripheral surface 10c of the rotor shaft 10 (that is, the thickness of the oil film damper 50). The clearances P and Q have a certain size in a peripheral direction in a stationary state where the center of the inner ring 21 is aligned with the center of the rotor shaft 10.

As shown in FIG. 5, an ejection-port opposing part 213 is formed at a position opposing an ejection direction of oil ejected from the oil ejection port 611 and is placed between the damper forming part 211 and the central area 212. In the present embodiment, the ejection-port opposing part 213 is perpendicular to the center line L.

An oil flowing hole 214 is formed in the ejection-port opposing part 213. As shown in FIG. 5, the oil flowing hole 214 is formed to be parallel to the center line L of the oil supply path 61 in a cross-section including the shaft center 10d of the rotor shaft 10 and the center line L of the oil supply path 61. In the present embodiment, an opening width d2 of the oil flowing hole 214 is larger than a diameter d1 of the oil ejection port 611. The oil flowing hole 214 is provided in plural, and these oil flowing holes 214 are arranged with peripherally equal intervals. In the present embodiment, four oil flowing holes 214 are arranged with peripherally equal intervals.

As shown in FIG. 5, the inner ring 21 includes a storage-part forming part 216 that is formed between the damper forming part 211 and the ejection-port opposing part 213 in the axial direction X to form an oil storage part 51 for storing oil between the storage-part forming part 216 and the outer peripheral surface 10c of the rotor shaft 10. The diameter of the storage-part forming part 216 is larger than that of the damper forming part 211, and a wall surface 216a on a side of the damper forming part 211 is formed to be parallel to the center line L in a cross-section including the shaft center 10d of the rotor shaft 10 and the center line L. Oil supplied through the oil flowing hole 214 is supplied via the oil storage part 51 to the oil film damper 50.

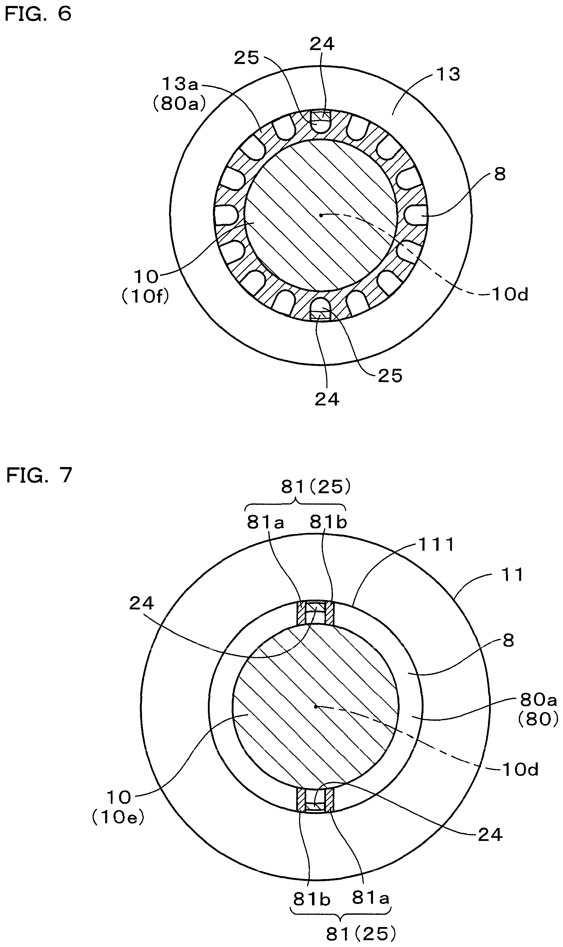

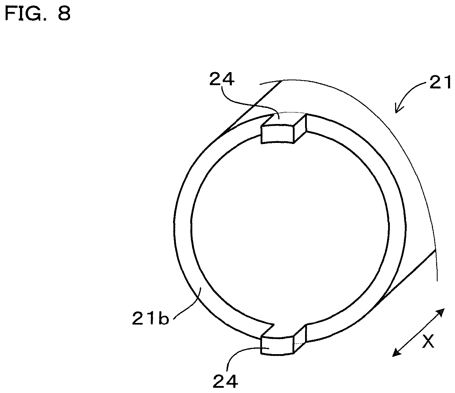

As shown in FIG. 5, the inner ring 21 includes the protruding part 24 that protrudes in the axial direction X at the axial-direction end part 21b on a side of the compressor impeller 12. As shown in FIG. 8, a pair of the protruding parts 24 is provided in a diameter direction. As shown in FIG. 6, the circumferential width of the protruding part 24 is slightly narrower than that of the engagement part 25 to be described later. As shown in FIG. 4, the protruding part 24 that protrudes in the axial direction X is also formed at the axial-direction end part 21c of the inner ring 21 on a side of the turbine impeller 11 as well as on the side of the compressor impeller 12.

As shown in FIG. 4, the rotor shaft 10 has a large diameter part 10e on a side of the first end 10a and a small diameter part 10f on a side of the second end 10b. The small diameter part 10f has a diameter smaller than that of the large diameter part 10e, and a stepped part 10g is formed between the large diameter part 10e and the small diameter part 10f. The compressor impeller 12 is provided on the small diameter part 10f, and the collar 13 functioning as an annular member is provided between the compressor impeller 12 and the stepped part 10g. The collar 13 has an annular shape and is fixed to the small diameter part 10f by a shaft end nut 14. As shown in FIG. 5, the collar 13 includes the end-part opposing part 80 (a compressor-side end-part opposing part 80b) that opposes the axial-direction end part 21b. In the present embodiment, as shown in FIGs. 5 and 6, a plurality of oil slingers 8 formed by cutting away the end-part opposing part 80 in a curved shape are arranged in the end-part opposing part 80 with peripherally equal intervals. Among a plurality of the oil slingers 8, a pair of the oil slingers 8 positioned in a diameter direction engages with a pair of the protruding parts 24. That is, the oil slinger 8 that engages with the protruding part 24 constitutes the engagement part 25.

As shown in FIG. 4, the rotor shaft 10 is joined to the turbine impeller 11 via an enlarged diameter part 111 provided at the first end 10a of the rotor shaft 10. The enlarged diameter part 111 is fixed to the first end 10a of the rotor shaft 10 by welding. The end-part opposing part 80 (a turbine-side end-part opposing part 80a) that opposes the axial-direction end part 21c of the inner ring 21 is formed in the enlarged diameter part 111 as well as in the collar 13. In the present embodiment, the oil slingers 8 are formed in the turbine-side end-part opposing part 80a along a peripheral direction in an annular manner. As shown in FIG. 7, a standing wall part 81 that stands radially outside is provided in the oil slinger 8. The standing wall parts 81 are formed in a diameter direction in a pair. The standing wall part 81 is constituted by a first standing wall 81a and a second standing wall 81b. The first standing wall 81a is parallel to the second standing wall 81b in the axial direction X (see FIG. 4), and is spaced apart from the second standing wall 81b in a peripheral direction by a distance substantially equal to the peripheral width of the protruding part 24. The protruding part 24 is fitted into the space between the first standing wall 81a and the second standing wall 81b, and the standing wall part 81 constitutes the engagement part 25.

As described above, as the protruding parts 24 formed at the axial-direction end parts 21b and 21c of the inner ring 21 respectively engage with the engagement parts 25 formed in the collar 13 and the enlarged diameter part 111, the inner ring 21 rotates with rotation of the rotor shaft 10.

The outer ring 22 of the ball bearing 20 is formed in an annular shape. As shown in FIG. 4, two outer rings 22 are provided, and each of the outer rings 22 is arranged to oppose an outer peripheral surface of the inner ring 21 in each of areas in the vicinity of both end parts of the inner ring 21 in the axial direction X (a surface of the inner ring 21 opposite to a surface facing the rotor shaft 10). A ball rotator 23 is interposed between the inner ring 21 and the outer ring 22 via a holder (not shown). The inner ring 21 and the outer ring 22 are thus configured to be rotatable to each other via the rotator 23 so as to constitute the ball bearing 20. The outer ring 22 is fixed in the housing 30 via the retainer 60, and the housing 30 bears the rotor shaft 10 via the ball bearing 20.

In the clearance P formed between the inner ring 21 and the rotor shaft 10 in each area in the vicinity of both end parts of the inner ring 21, oil is interposed in a film state to form the oil film damper 50. As shown in FIG. 5, in a state where the oil flowing hole 214 of the inner ring 21 opposes the oil ejection port 611, oil supplied from the oil supply path 61 formed in the retainer 60 enters between the inner ring 21 and the rotor shaft 10 through the oil flowing hole 214 and reaches the clearance P through the oil storage part 51 to form the oil film damper 50.

As shown in FIG. 5, the inner ring 21 is provided with a discharge-part forming part 218 on a side of the damper forming part 211 opposite to a side on which the storage-part forming part 216 is formed, to form an oil discharge part 52 for discharging oil supplied to the oil film damper 50, . According to the present embodiment, the discharge-part forming part 218 is spaced apart from the outer peripheral surface 10c of the rotor shaft 10 at the both end parts of the inner ring 21 in the axial direction X, so that the oil discharge part 52 for discharging oil from the oil film damper 50 through the space between the discharge-part forming part 218 and the outer peripheral surface 10c is formed.

The oil slinger 8 is provided at a position opposed to the oil discharge part 52. The oil slinger 8 is formed in a recessed shape so as to scatter oil discharged from the oil discharge part 52 radially outside of the rotor shaft 10. In the present embodiment, as shown in FIG. 4, the oil slinger 8 is formed in the collar 13 provided on a side of the compressor impeller 12 and the enlarged diameter part 111 of the turbine impeller 14. As shown in FIGs. 5 and 7, the oil slinger 8 is formed by cutting away an end part 13a of the collar 13 on a side of the ball bearing 20 in a curved shape, and arranged at plural positions with peripherally equal intervals. Similarly in the enlarged diameter part 111, a plurality of the oil slingers 8 are also formed.

The rotor shaft 10 is mounted on the housing 30 in the following way. First, the inner ring 21 of the ball bearing 20 is inserted into the retainer 60. The rotator 23 and the outer ring 22 are mounted on the retainer 60 from both end sides of the retainer 60 in the axial direction X so as to form the ball bearing 20. The ball bearing 20 and the retainer 60 are then inserted into the housing 30 and fixed in the housing 30 with a plate 70 and a bolt 71 so as to be fit into the housing 30. Then, the turbine impeller 11 and the rotor shaft 10 are inserted into the housing 30, and the protruding part 24 of the inner ring 21 on a side of the turbine impeller 11 engages with the engagement part 25 formed in the enlarged diameter part 111. Thereafter, in a state where the protruding part 24 on a side of the compressor impeller 12 engages with the engagement part 25 formed in the collar 13, the collar 13 and the compressor impeller 12 are fixed by tightening a shaft end nut 14.

According to the bearing structure of a turbocharger 1 of the present embodiment, the oil film damper 50 is formed between the inner ring 21 of the ball bearing 20 and the rotor shaft 10 (in the clearance P). Thus, components inside the oil film damper 50 include the rotor shaft 10, the turbine impeller 11 and the compressor impeller 12 which mounted on the rotor shaft 10, and the inner ring 21 that rotates with rotation of the rotor shaft 10, but do not include components of the ball bearing 20 other than the inner ring 21 (the outer ring 22, the rotator 23, the holder, and the like). For this reason, the mass of the components inside the oil film damper 50 is relatively small. The inner diameter of the inner ring 21 of the ball bearing 20 is much smaller than the outer diameter of the outer ring 22, and thus the contact area of the oil film damper 50 and the outer peripheral surface 10c of the rotor shaft 10 is relatively small. For this reason, viscous force between the oil film damper 50 and the components inside the oil film damper 50 can be relatively reduced.

Reduction of the viscous force reduces inhibition force to hinder the rotation body assembly 100 from rotating about a center of mass, so that the rotation body assembly 100 easily rotates eccentrically only with low energy. As a result, during rotation of the rotor shaft 10, the impellers 11 and 12 at both ends of the rotor shaft 10 are prevented from largely whirling. Thus, generation of unusual noise can be prevented. Further, no need for a large chip clearance between the impeller 11 and the housing 33 or between the impeller 12 and the housing 34 enables to improve operation efficiency. When the compressor housing 34 includes an abradable seal, the compressor impeller 12 is prevented from excessively contacting the abradable seal, and thus damage of the compressor impeller 12 and excessive wear of the abradable seal are prevented. Moreover, as described above, since the rotation body assembly 100 easily rotates eccentrically, adjustment of the mass balance in the rotation body assembly 100 does not require so high accuracy. Thus, the mass balance is easily adjusted and manufacturing costs can be reduced.

As described above, the viscous force between the oil film damper 50 and the rotation body assembly 100 can be relatively reduced, and thus an improvement in rotation response of the rotation body assembly 100 can be expected, which contributes to an improvement in transient performance of an internal combustion engine.

The viscous force can be reduced especially when the viscosity of oil tends to be high, e.g. under low temperature environment, and the reduction of the viscous force enables to effectively bring about an oil damping effect on the rotation body assembly 100.

Each of the axial-direction end parts 21b and 21c of the inner ring 21 engages with each of the end-part opposing parts 80 provided in the rotor shaft 10 via the protruding part 24 and the engagement part 25, and thus the inner ring 21 reliably rotates with rotation of the rotor shaft 10. Each of the end-part opposing parts 80 is opposed to each of the axial-direction end parts 21b and 21c in the axial direction X, and thus the protruding part 24 engages with the engagement part 25 in the axial direction X. Accordingly, the inner ring 21 can engage with the rotor shaft 10 without attaching a screw and the like to the rotor shaft 10 in a direction crossing the axial direction X. No need for screw hole machining and the like on the rotor shaft 10 enables to easily adjust the mass balance of the rotation body assembly 100 and reduce manufacturing costs.

The rotor shaft 10 need not be subjected to screw hole machining, and thus, fatigue strength of the rotor shaft 10 is improved as compared to a case where screw hole machining is performed on the rotor shaft 10. The improvement of fatigue strength eliminates the necessity to increase the diameter of the rotor shaft 10. As a result, the ball bearing 20 can be downsized and the contact area of the oil film damper 50 and the ball bearing 20 can be reduced. Consequently, the viscous force between the oil film damper 50 and the ball bearing 20 can be reduced and the operation efficiency of a turbocharger 1 can be improved. Further, loosening of a screw that might be caused by high speed rotation of the rotor shaft needs not be considered.

In the present embodiment, the end-part opposing part 80 includes the turbine-side end-part opposing part 80a that opposes the axial-direction end part 21c on the side of the turbine impeller 11 and the compressor-side end-part opposing part 80b that is opposed to the axial-direction end part 21b on the side of the compressor impeller 12. The turbine-side end-part opposing part 80a is formed in the enlarged diameter part 111 provided as a joining part of the rotor shaft 10 and the turbine impeller 11. The compressor-side end-part opposing part 80b is formed in the collar 13 on the side of the compressor impeller 12. Any additional member is, thus, not required to provide the end-part opposing part 80 and thus manufacturing costs can be reduced.

According to the present embodiment, a plurality of the oil slingers 8 formed in a recessed shape so as to radially outwardly scatter oil flowing out of the oil film damper 50 are provided in the enlarged diameter part 111 and the collar 13. The protruding parts 24 engage with some of the oil slingers 8 to constitute the engagement part 25. The oil slinger 8 can be used as the engagement part 25, and thus an additional member and additional machining are not required, so that manufacturing costs can be reduced.

In the present embodiment, a plurality of the oil slingers 8 having a recessed shape are formed in the end-part opposing part 80. The protruding parts 24 engage with some of the oil slingers 8 to constitute the engagement part 25. The oil slinger 8 can be used as the engagement part 25, and thus an additional member and additional machining are not required, so that manufacturing costs can be reduced.

In the present embodiment, the protruding part 24 and the engagement part 25 are provided on the side of the compressor impeller 12 and on the side of the turbine impeller 11, however, the present invention is not limited to such configuration. The protruding part 24 and the engagement part 25 may be provided on either one of the side of the compressor impeller 12 and the side of the turbine impeller 11. In such a case, manufacturing costs can be reduced as compared to a case where the protruding part 24 and the engagement part 25 are provided on both the side of the compressor impeller 12 and the side of the turbine impeller 11. While the protruding part 24 and the engagement part 25 may be provided at one position, the protruding part 24 and the engagement part 25 are preferably provided respectively in a pair in a diameter direction, that is, the protruding part 24 and the engagement part 25 are provided at two positions. This is because the mass balance of the rotation body assembly 100 is easily adjusted. It is thus most preferable to provide a pair of the protruding parts 24 and a pair of the engagement parts 25 in a diameter direction on either one of the side of the compressor impeller 12 and the side of the turbine impeller 11.

According to the present embodiment, it is possible to provide the bearing structure of a turbocharger 1 that can prevent generation of unusual noise, improve operation efficiency, and reduce manufacturing costs.

### (Embodiment 3)

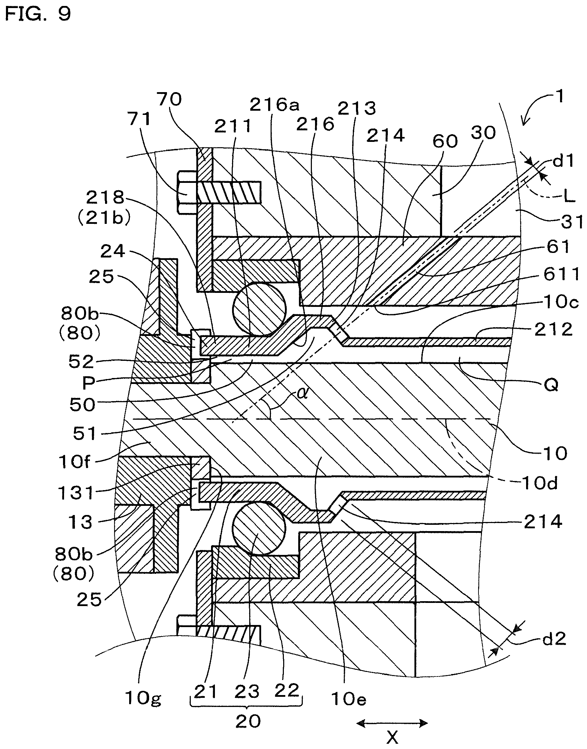

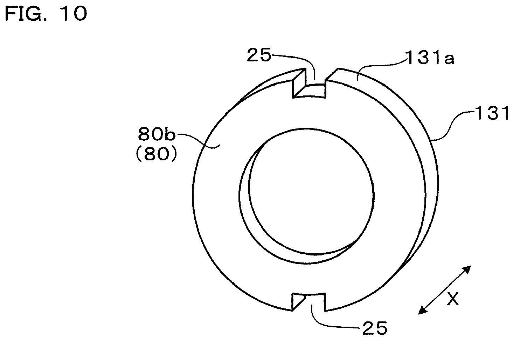

In a bearing structure of a turbocharger 1 according to the present embodiment, as shown in FIGs. 9 and 10, an annular member 131 is used as an annular member instead of the collar 13 in Embodiment 2(see FIG. 4). As shown in FIG. 9, similarly to Embodiment 2, a rotor shaft 10 has a large diameter part 10e formed on a side of a turbine shaft 11 and a small diameter part 10f that is formed on a side of a compressor impeller 12 and has a diameter smaller than that of the large diameter part 10e, and a stepped part 10g formed between the large diameter part 10e and the small diameter part 10f. The small diameter part 10f is inserted into the annular member 131, and the annular member 131 is interposed between the collar 13 that is shrink-fitted into the small diameter part 10f and the stepped part 10g. As shown in FIG. 10, in an end-part opposing part 80 of the annular member 131, a pair of recessed engagement parts 25 recessed from an outer edge 131a is formed in a diameter direction. Constituent elements equivalent to those of Embodiment 2 are denoted by assigning the same reference numerals to omit the description.

According to the bearing structure of a turbocharger 1 of the present embodiment, the annular member 131 provided separately from the collar 13 enables easy machining to form the engagement part 25 with a simple configuration, so that manufacturing costs can be reduced. The present embodiment exhibits the operational effects equivalent to those of Embodiment 2 other than the operational effect of forming the engagement part 25 in the collar 13.

### (Embodiment 4)

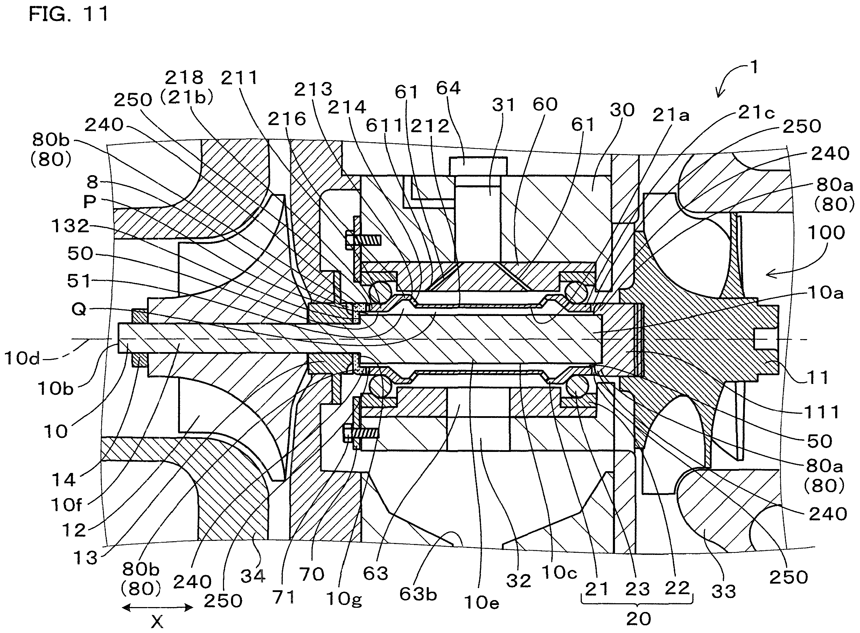

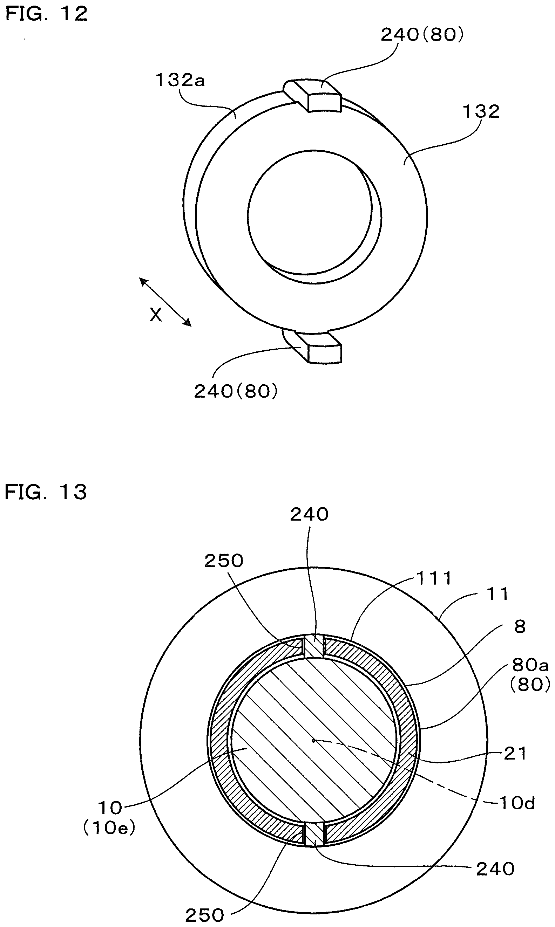

A bearing structure of a turbocharger 1 according to the present embodiment includes a protruding part 240 and an engagement part 250 shown in FIGs. 11 to 13 instead of the protruding part 24 and the engagement part 25 of Embodiment 2 (see FIGs. 4 to 7). As shown in FIG. 11, the protruding part 240 provided on a side of a compressor impeller 12 is formed in an annular member 132. The annular member 132 is interposed between a collar 13 and a stepped part 10f, similarly to the annular member 131 of Embodiment 3 (see FIG. 9). As shown in FIG. 12, a pair of the protruding parts 240 is formed in the annular member 132 in a diameter direction. The protruding part 240 protrudes radially outside from an outer edge 132a of the annular member 132, and is also bent to a side of an inner ring 21, as shown in FIG. 11.

As shown in FIGs. 11 and 13, an enlarged diameter part 111 is provided with the protruding part 240 formed on a side of a turbine impeller 11 . The protruding parts 240 are formed in a pair in a diameter direction to extend toward the inner ring 21 in a ribbed manner.

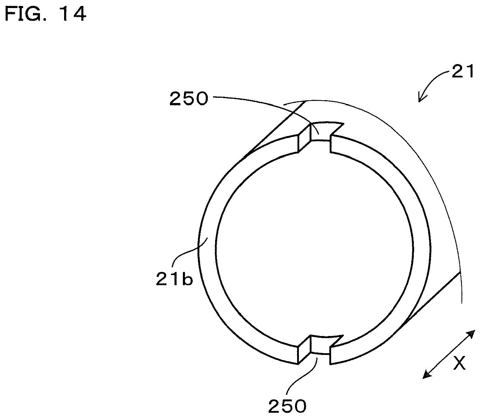

As shown in FIG. 14, the recessed engagement part 250 is formed at an axial-direction end part 21b of the inner ring 21. The engagement parts 250 are formed in a pair in a diameter direction. A pair of the engagement parts 250 is also formed at an axial-direction end part 21c of the inner ring 21 in a diameter direction. As shown in FIG. 11, the protruding parts 240 formed in the annular member 132 and the enlarged diameter part 111 engage with the respective engagement parts 250. The inner ring 21 thus rotates with axial rotation of the rotor shaft 10. Constituent elements equivalent to those of Embodiment 2 are denoted by assigning the same reference numerals to omit the description. The bearing structure of a turbocharger 1 according to the present embodiment exhibits the operational effects equivalent to those of Embodiment 3.

While in the present embodiment, the engagement part 250 is provided at the axial-direction end parts 21b and 21c of the inner ring 21 as shown in FIG. 13, the engagement part 250 (see FIG. 14) may be formed at one of the axial-direction end parts 21b and 21c and the protruding part 24 of the second embodiment (see FIG. 8) may be formed at the other of the axial-direction end parts 21b and 21c. In such a case, the annular member 132 (see FIG. 12) or the enlarged diameter part 111 (see FIG. 13), both having the protruding part 240 formed to be engaged with the engagement part 250 (see FIG. 14) and the engagement part 25 (see FIG. 4) formed to be engaged with the protruding part 24 are formed. These cases also exhibit the operational effects as described above.

### (Embodiment 5)

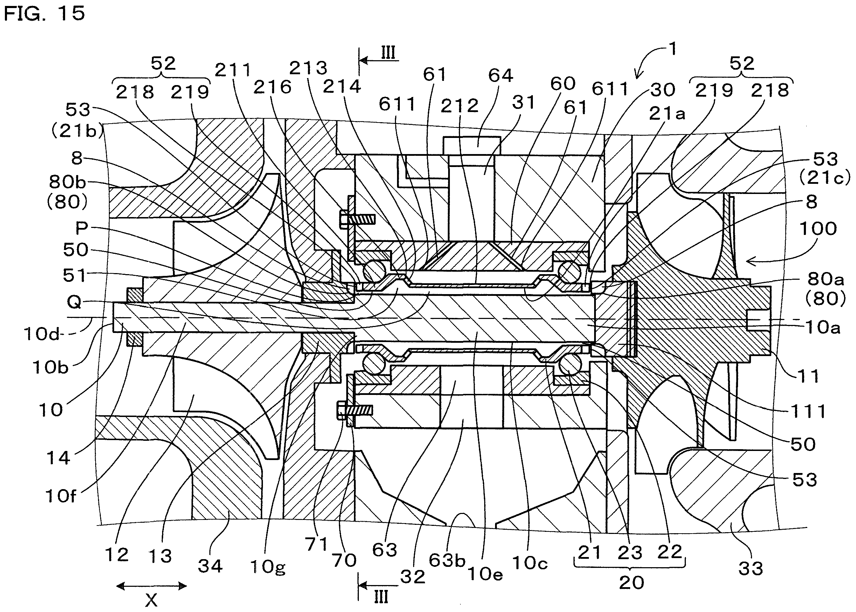

A bearing structure of a turbocharger 1 according to the present embodiment is described with reference to FIGs. 15 to 18.

As shown in FIG. 15, the bearing structure of a turbocharger 1 according to the present embodiment includes a rotor shaft 10, a ball bearing 20, a retainer 60, and a housing 30.

A turbine impeller 11 is mounted on a first end 10a of the rotor shaft 10 and a compressor impeller 12 is mounted on a second end 10b thereof.

The ball bearing 20 includes an inner ring 21 and an outer ring 22 that are supported in relatively rotatably manner.

The retainer 60 holds the outer ring 22.

The housing 30 houses therein the rotor shaft 10, the ball bearing 20, and the retainer 60 to constitute a bearing housing.

An oil film damper 50 is formed of oil in a film state and is interposed between the inner ring 21 and an outer peripheral surface 10c of the rotor shaft 10.

According to the present embodiment, the inner ring 21 is configured to rotate with rotation of the rotor shaft 10 via the oil film damper 50.

The bearing structure of a turbocharger 1 according to the present embodiment will be described in detail below.

As shown in FIG. 15, the first end 10a of the rotor shaft 10 is provided with the turbine impeller 11 integrally mounted thereon. The turbine impeller 11 is housed in a turbine housing 33. On the other hand, the second end 10b of the rotor shaft 10 is inserted into a collar 13 and the compressor impeller 12, and a shaft end nut 14 prevents the collar 13 and the compressor impeller 12 from coming off and rotating. The compressor impeller 12 is housed in a compressor housing 34. The housing 30 provided as a bearing housing for the rotor shaft 10 is provided between the turbine housing 33 and the compressor housing 34.

As shown in FIG. 15, the ball bearing 20 that bears the rotor shaft 10 is held in the housing 30 via the retainer 60. An oil supply path 61 for supplying oil to around the ball bearing 20 and an oil discharge path 63 for discharging oil from around the ball bearing 20 are formed in the retainer 60.

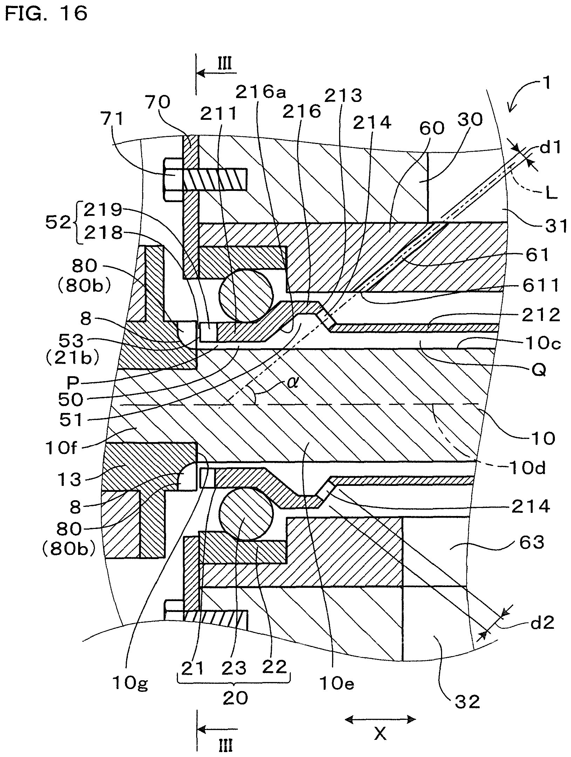

As shown in FIG. 16, the oil supply path 61 is formed at an inclined angle so as to be closer to the oil film damper 50 as approaching closer to the rotor shaft 10. In the present embodiment, the oil supply path 61 passes through the retainer 60 straightway. Accordingly, a center line L that is an imaginary line which passes through the center of the oil supply path 61 and which is parallel to a direction in which the oil supply path 61 passes in the retainer 60 is linear. At an exit of the oil supply path 61 (an end part of the oil supply path 61 on a side of the inner ring 21), an oil ejection port 611 that is open to eject oil flowing in the oil supply path 61 to the inner ring 21 is formed. According to the present embodiment, as shown in FIG. 15, the oil supply path 61 is formed at two positions to supply oil to each the respective oil film dampers 50 formed at both ends in an axial direction X. The oil discharge path 63 is formed on the vertically lower side of the housing 30, and an oil discharge port 63b that is open to outside of the housing 30 is formed below the oil discharge path 63. An auxiliary oil supply path extending vertically to the axial direction X may be formed between the two oil supply paths 61.

As shown in FIG. 16, the center line L of the oil supply path 61 is inclined with respect to a shaft center 10d of the rotor shaft 10. An angle α of the center line L and the shaft center 10d is preferably equal to or less than 45° and more preferably equal to or less than 30°. In the present embodiment, the angle α is 30°.

As shown in FIG. 15, the ball bearing 20 includes the inner ring 21 and the outer ring 22. The inner ring 21 is formed in a substantially cylindrical shape. A damper forming part 211 is formed in end-part areas of the inner ring 21 in the axial direction X to form the oil film damper 50 between the damper forming part 211 and the outer peripheral surface 10c of the rotor shaft 10. In the present embodiment, the inner diameter of the damper forming part 211 is larger than the outer diameter of the rotor shaft 10 by approximately 0.05 to 0.1 mm.

The inner diameter of a central area 212 of the inner ring 21 in the axial direction X is larger than the inner diameter of the damper forming part 211. In the present embodiment, the inner diameter of the central area 212 is larger than the outer diameter of the rotor shaft 10 by approximately 0.2 mm or more. Accordingly, a clearance Q between the inner ring 21 in the central area 212 and the outer peripheral surface 10c of the rotor shaft 10 is twice or more larger than a clearance P between the damper forming part 211 and the outer peripheral surface 10c of the rotor shaft 10 (that is, the thickness of the oil film damper 50). The clearances P and Q have a certain size in a peripheral direction in a stationary state where the center of the inner ring 21 is aligned with the center of the rotor shaft 10.

As shown in FIG. 16, an ejection-port opposing part 213 is formed at a position opposing an ejection direction of oil ejected from the oil ejection port 611 and is placed between the damper forming part 211 and the central area 212. In the present embodiment, the ejection-port opposing part 213 is perpendicular to the center line L.

An oil flowing hole 214 is formed in the ejection-port opposing part 213. As shown in FIG. 16, the oil flowing hole 214 is formed on the center line L of the oil supply path 61 in a cross-section including the shaft center 10d of the rotor shaft 10 and the center line L of the oil supply path 61. In the present embodiment, an opening width d2 of the oil flowing hole 214 is larger than a diameter d1 of the oil ejection port 611. The oil flowing hole 214 is provided in plural, and these oil flowing holes 214 are arranged with peripherally equal intervals. In the present embodiment, four oil flowing holes 214 are arranged with peripherally equal intervals.

As shown in FIG. 16, the inner ring 21 includes a storage-part forming part 216 that is formed between the damper forming part 211 and the ejection-port opposing part213 in the axial direction X to form an oil storage part 51 for storing oil between the storage-part forming part 216 and the outer peripheral surface 10c of the rotor shaft 10. The diameter of the storage-part forming part 216 is larger than that of the damper forming part 211, and a wall surface 216a on a side of the damper forming part 211 is formed to be parallel to the center line L in a cross-section including the shaft center 10d of the rotor shaft 10 and the center line L. Oil supplied through the oil flowing hole 214 is supplied via the oil storage part 51 to the oil film damper 50.

As shown in FIG. 16, The inner ring 21 is cut away in a recessed shape at an axial-direction end part 21b on a side of the compressor impeller 12 so as to form an oil discharge groove 219. As shown in FIG. 4, the oil discharge parts 219 are provided in two pairs in a diameter direction of the inner ring 21. The oil discharge groove 219 constitutes an oil discharge part 52 with a discharge-part forming part 218 to be described later. As shown in FIG. 15, the inner ring 21 is cut away in a recessed shape at an axial-direction end part 21c on a side of the turbine impeller 11 in a similar way on the side of the compressor impeller 12so as to form the oil discharge groove 219.

As shown in FIG. 16, the inner ring 21 is provided with an opposing surface 53 formed between adjacent oil discharge grooves 219 at the axial-direction end part 21b on the side of the compressor impeller 12 in a manner to oppose an end-part opposing part 80 of the collar 13 that is described later (a compressor-side end-part opposing part 80b). Also, the inner ring 21 is provided with the opposing surface 53 between adjacent oil discharge grooves 219 at the axial-direction end part 21c of the inner ring 21 on the side of the turbine impeller 11 in a manner to oppose the end-part opposing part 80 of an enlarged diameter part 111 that is described later (a turbine-side end-part opposing part 80a). A clearance between each of the opposing surfaces 53 and each of the end-part opposing parts 80 (the compressor-side end-part opposing part 80b and the turbine-side end-part opposing part 80a) has a predetermined size, and is positioned in a thrust direction of the rotor shaft 10 (that is, the axial direction X) by the opposing surface 53 and the end-part opposing part 80.

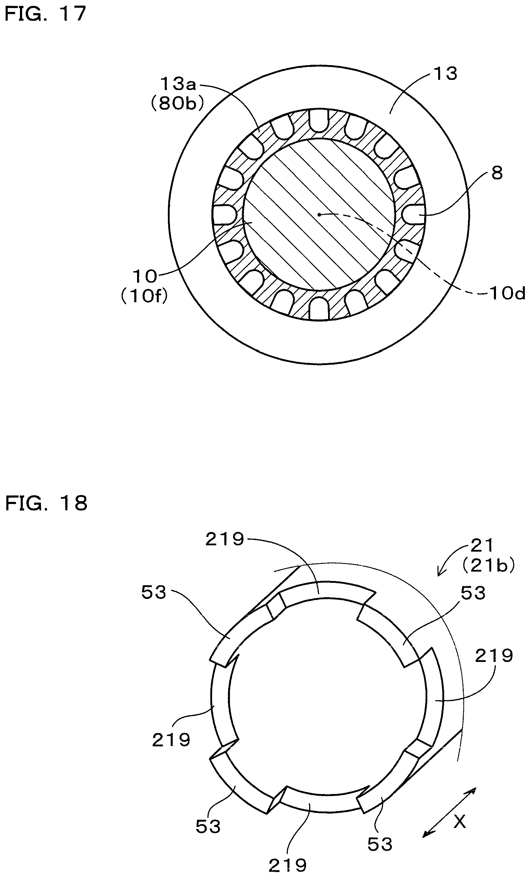

As shown in FIG. 15, the rotor shaft 10 has a large diameter part 10e on a side of the one end 10a and a small diameter part 10f on a side of the other end 10b. The small diameter part 10f has a diameter smaller than that of the large diameter part 10e, and a stepped part 10g is formed between the large diameter part 10e and the small diameter part 10f. The compressor impeller 12 is provided on the small diameter part 10f, and the collar 13 functioning as an annular member is provided between the compressor impeller 12 and the stepped part 10g. The collar 13 has an annular shape and is fixed to the small diameter part 10f by the shaft end nut 14. As shown in FIG. 16, the collar 13 includes the end-part opposing part 80 (the compressor-side end-part opposing part 80b) that is opposed to the opposing surface 53 of the axial-direction end part 21b. In the present embodiment, as shown in FIGs. 16 and 17, a plurality of oil slingers 8 formed by cutting away the end-part opposing part 80 in a curved shape are arranged in the end-part opposing part 80 with peripherally equal intervals.

As shown in FIG. 15, the rotor shaft 10 is joined to the turbine impeller 11 via the enlarged diameter part 111 provided at the first end 10a of the rotor shaft 10. The enlarged diameter part 111 is fixed to the first end 10a of the rotor shaft 10 by welding. The end-part opposing part 80 (the turbine-side end-part opposing part 80a) that is opposed to the opposing surface 53 of the axial-direction end part 21c of the inner ring 21 is formed in the enlarged diameter part 111 as well as in the collar 13.

The outer ring 22 of the ball bearing 20 is formed in an annular shape. As shown in FIG. 15, two outer rings 22 are provided, and each of the outer rings 22 is arranged to oppose an outer peripheral surface of the inner ring 21 in each of areas in the vicinity of both end parts of the inner ring 21 in the axial direction X (a surface of the inner ring 21 opposite to a surface facing the rotor shaft 10). A ball rotator 23 is interposed between the inner ring 21 and the outer ring 22 via a holder (not shown). The inner ring 21 and the outer ring 22 are thus configured to be relatively rotatable to each other via the rotator 23 so as to constitute the ball bearing 20. The outer ring 22 is fixed in the housing 30 via the retainer 60, and the rotor shaft 10 is placed in the housing 30 via the ball bearing 20.

The oil film damper 50 is formed of oil interposed in the clearance P formed between the inner ring 21 in each of areas in the vicinity of both end parts of the inner ring 21 and the rotor shaft 10. As shown in FIG. 16, in a state where the oil flowing hole 214 of the inner ring 21 opposes the oil ejection port 611, oil supplied from the oil supply path 61 formed in the retainer 60 enters between the inner ring 21 and the rotor shaft 10 through the oil flowing hole 214 and reaches the clearance P through the oil storage part 51 so as to form the oil film damper 50.

As shown in FIG. 16, the inner ring 21 is provided with the discharge-part forming part 218 on a side of the damper forming part 211 opposite to a side at which the storage-part forming part 216 is formed, to form the oil discharge part 52 with the oil discharge groove 219 described above. According to the present embodiment, the discharge-part forming part 218 is spaced apart from the outer peripheral surface 10c of the rotor shaft 10 at the both end parts of the inner ring 21 in the axial direction X, so that the oil discharge part 52 for discharging oil from the oil film damper 50 through the space between the discharge-part forming part 218 and the outer peripheral surface 10c is formed.

The oil slinger 8 is provided at a position opposing the oil discharge part 52, being formed in a recessed shape so as to scatter oil discharged from the oil discharge part 52 radially outside of the rotor shaft 10. In the present embodiment, as shown in FIG. 15, the oil slinger 8 is formed in the collar 13 provided on the side of the compressor impeller 12 and the enlarged diameter part 111 of the turbine impeller 11. As shown in FIG. 16, the oil slinger 8 is formed by cutting away an end part 13a of the collar 13 on a side of the ball bearing 20 in a curved shape, and arranged at plural positions with peripherally equal intervals as shown in FIG. 17. Similarly, a plurality of the oil slingers 8 are also formed in the enlarged diameter part 111.

The rotor shaft 10 is mounted on the housing 30 in the following way. First, the inner ring 21 of the ball bearing 20 is inserted into the retainer 60. The rotator 23 and the outer ring 22 are mounted on the retainer 60 from both end sides of the retainer 60 in the axial direction X so as to form the ball bearing 20. The ball bearing 20 and the retainer 60 are then inserted into the housing 30 and fixed in the housing 30 with a plate 70 and a bolt 71 so as to be fit into the housing 30. Then, the turbine impeller 11 and the rotor shaft 10 are inserted into the housing 30. The collar 13 and the compressor impeller 12 are then fixed by tightening a shaft end nut 14.

According to the bearing structure of a turbocharger 1 of the present embodiment, the oil film damper 50 is formed between the inner ring 21 of the ball bearing 20 and the rotor shaft 10 (in the clearance P), and thus components inside the oil film damper 50 include the rotor shaft 10, the turbine impeller 11 and the compressor impeller 12 which have been mounted on the rotor shaft 10, and the inner ring 21 that rotates with rotation of the rotor shaft 10, but do not include components of the ball bearing 20 other than the inner ring 21 (the outer ring 22, the rotator 23, the holder, and the like). For this reason, the (inertial) mass of the components inside the oil film damper 50 is relatively small. The inner diameter of the inner ring 21 of the ball bearing 20 is much smaller than the outer diameter of the outer ring 22, and thus the contact area of the oil film damper 50 and the outer peripheral surface 10c of the rotor shaft 10 is relatively small. For this reason, viscous force between the oil film damper 50 and the components inside the oil film damper 50 can be relatively reduced.

Reduction of the viscous force reduces inhibition force to hinder the rotation body assembly 100 from rotating about a center of mass, in addition, the (inertial) mass of the components inside the oil film damper 50 is relatively small, so that the rotation body assembly 100 easily rotates eccentrically only with low energy. As a result, during rotation of the rotor shaft 10, the impellers 11 and 12 at both ends of the rotor shaft 10 are prevented from largely whirling. Thus, generation of unusual noise can be prevented. Further, no need for a large chip clearance between the impeller 11 and the housing 33 or between the impeller 12 and the housing 34 enables to improve operation efficiency. When the compressor housing 34 includes an abradable seal, the compressor impeller 12 is prevented from excessively contacting the abradable seal, and thus damage of the compressor impeller 12 and excessive wear of the abradable seal are prevented. Moreover, as described above, since the rotation body assembly 100 easily rotates eccentrically, adjustment of the mass balance in the rotation body assembly 100 does not require so high accuracy. Thus, the mass balance is easily adjusted and manufacturing costs can be reduced.

As described above, the viscous force between the oil film damper 50 and the rotation body assembly 100 can be relatively reduced, and thus an improvement in rotation response of the rotation body assembly 100 can be expected, which contributes to an improvement in transient performance of an internal combustion engine.

The viscous force can be reduced especially when the viscosity of oil tends to be high, e.g. under low temperature environment, and the reduction of the viscous force enables to effectively bring about an oil damping effect on the rotation body assembly 100.

The inner ring 21 is configured to rotate with rotation of the rotor shaft 10 via the oil film damper 50. Specifically, friction in the oil film damper 50 (that is, friction between the inner ring 21 and the rotor shaft 10) is larger than friction in the ball bearing 20 (that is, friction between the inner ring 21 and the outer ring 22). For this reason, when the rotor shaft 10 rotates, relative rotation occurs between the inner ring 21 and the outer ring 22 in the ball bearing 20, and thus relative rotation between the inner ring 21 and the rotor shaft 10 is suppressed in the oil film damper 50, so that the inner ring 21 can rotate with the rotation of the rotor shaft 10 only via the oil film damper 50. Consequently, no additional structure is required separately to engage the inner ring 21 with the rotor shaft 10 so that the inner ring 21 rotates with the rotor shaft 10. For example, screw hole machining on the rotor shaft 10 need not be performed to engage the rotor shaft 10 with the inner ring 21. Machining on an end part of the inner ring 21 need not be performed to engage the end part of the inner ring 21 with the oil slinger 8. Further, machining on the end part of the inner ring 21 and the collar 13 need not be performed to engage the end part of the inner ring 21 with the collar 13. Therefore, machining costs are eliminated and adjustment of the mass balance of the rotation body assembly 100 is made easily, so that cost reduction in manufacturing can be expected.

The rotor shaft 10 need not be subjected to screw hole machining, and thus fatigue strength of the rotor shaft 10 is improved as compared to a case where screw hole machining is performed on the rotor shaft. The improvement of fatigue strength eliminates the necessity to increase the diameter of the rotor shaft 10. As a result, the ball bearing 20 can be downsized and the contact area of the oil film damper 50 and the ball bearing 20 can be reduced. Consequently, the viscous force between the oil film damper 50 and the ball bearing 20 can be reduced and the operation efficiency of a turbocharger 1 can be improved. Further, loosening of a screw that might be caused by high speed rotation of the rotor shaft 10 need not be considered.

In the present embodiment, the inner ring 21 is formed in a cylindrical shape extending along the axial direction X of the rotor shaft 10. The rotor shaft 10 is provided with the end-part opposing parts 80 that oppose the axial-direction end parts 21b and 21c of the inner ring 21 in the axial direction X. And, at least one of the axial-direction end part 21b, 21c and the end-part opposing part 80 (in the present embodiment, formed in both of them) is provided with the oil discharge groove 219 formed by cutting away so as to discharge oil discharged from the oil film damper 50 . Such configuration enables to easily discharge oil supplied to the oil film damper 50 from the oil film damper 50 through the oil discharge groove 219 and to facilitate circulation of oil in the housing 30. The dischargeability of oil to be discharged from the oil film damper 50 is improved and the suppliability of oil to be supplied to the oil film damper 50 is also improved. Consequently, the oil is prevented from being filled in the housing 30 and leaking outside of the housing 30.

While the oil discharge groove 219 may be provided at one position, it is preferable to provide a plurality of the oil discharge grooves 219 so as to make a pair in a diameter direction, for embodiment, it is preferable to provide a pair of the oil discharge grooves 219 in the diameter direction or two pairs of the oil discharge grooves 219 in a diameter direction of the inner ring 21 as in the present embodiment. This is because such configuration enables easy adjustment of the weight balance of the rotation body assembly 100.

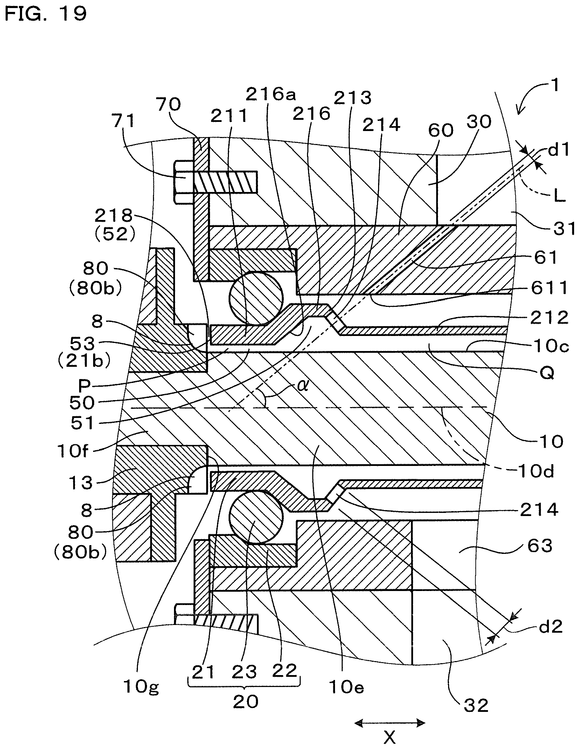

To discharge oil from the oil film damper 50, both the oil discharge groove 219 and the oil slinger 8 are not necessitated to be formed. As long as required oil dischargeability is secured, it is permissible to provide at least one of the oil discharge groove 219 and the oil slinger 8. For example, as in Modification 1 shown in FIG. 19, such configuration that the oil slinger 8 is formed without forming the oil discharge groove 219 may also be employed. In Modification 1, oil supplied to the oil film damper 50 is discharged to the oil slinger 8 via the discharge-part forming part 218 formed at the axial-direction end part 21b of the inner ring 21, and is scattered radially outside of the rotor shaft 10 by the oil slinger 8. In this way, required oil dischargeability can be secured.

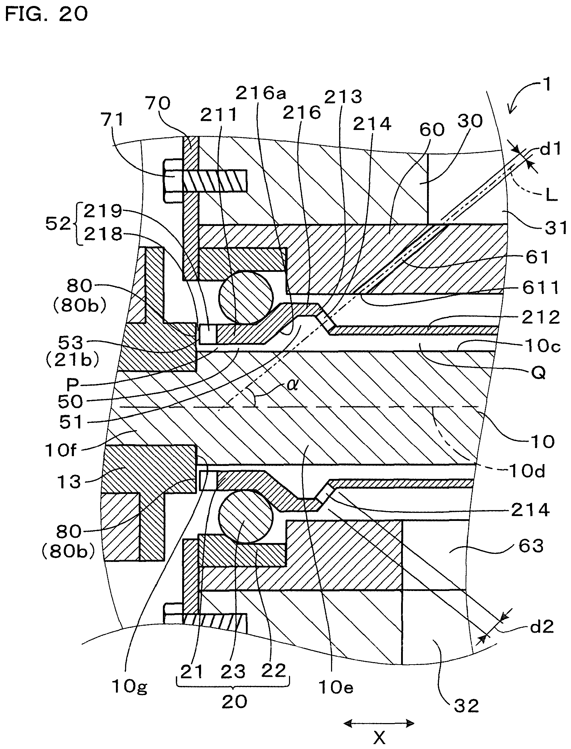

Further, as in a second modification shown in FIG. 20, for example, such configuration that the oil discharge groove 219 is formed without forming the oil slinger 8. In Modification 2, oil supplied to the oil film damper 50 is scattered radially outside of the rotor shaft 10 via the discharge-part forming part 218 and the oil discharge groove 219 that are formed at the axial-direction end part 21b of the inner ring 21. In this way, required oil dischargeability can be secured.

As described above, according to the present embodiment, it is possible to provide the bearing structure of a turbocharger 1 that can prevent generation of unusual noise, improve operation efficiency, and reduce manufacturing costs.

### (Embodiment 6)

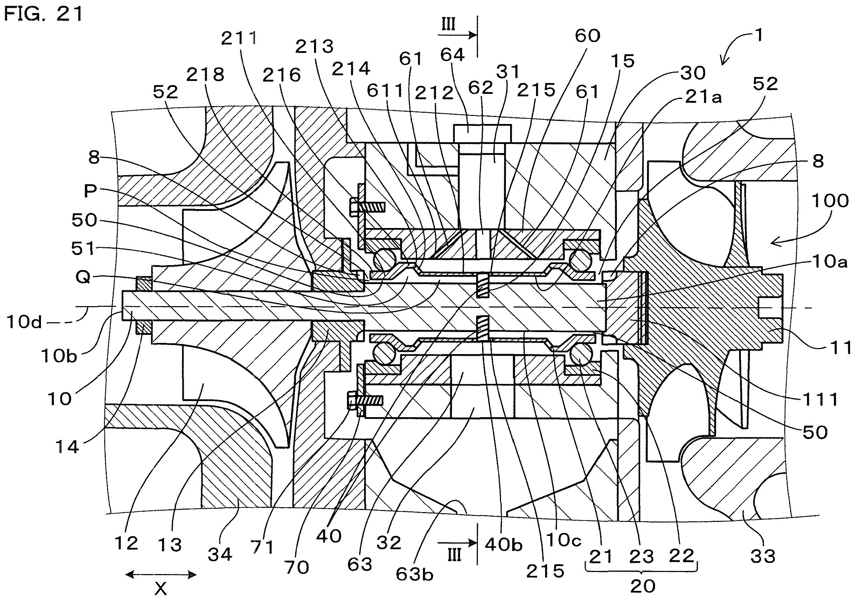

A bearing structure of a turbocharger 1 according to Embodiment 6 is described with reference to FIGs. 21 to 23. In the bearing structure of a turbocharger 1 according to Embodiment 6, unless otherwise described, constituent elements equivalent to those of the Embodiments described above are denoted by assigning the same reference numerals to omit the description.

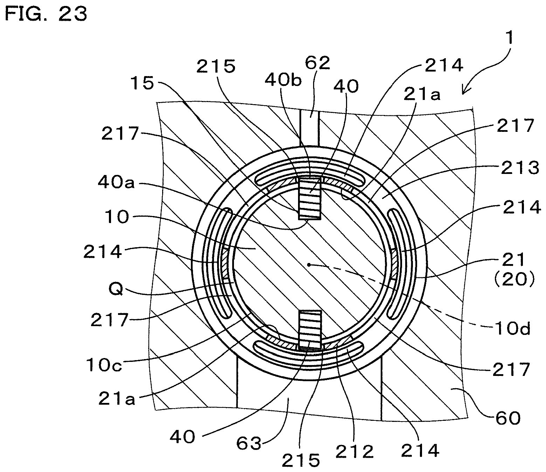

According to the present embodiment, as shown in FIG. 21, a retainer 60 is provided with an oil supply path 61 for supplying oil to around a ball bearing 20 and an auxiliary oil supply path 62 formed therein. The oil supply paths 61 are formed at two positions so as to supply oil to oil film dampers 50 formed at both ends in an axial direction X. The auxiliary oil supply path 62 is formed between the two oil supply paths 61. As shown in FIGs. 21 and 23, the auxiliary oil supply path 62 is formed in the same manner as that of the oil supply path 62 in Embodiment 1 (see FIGs. 1 and 2).

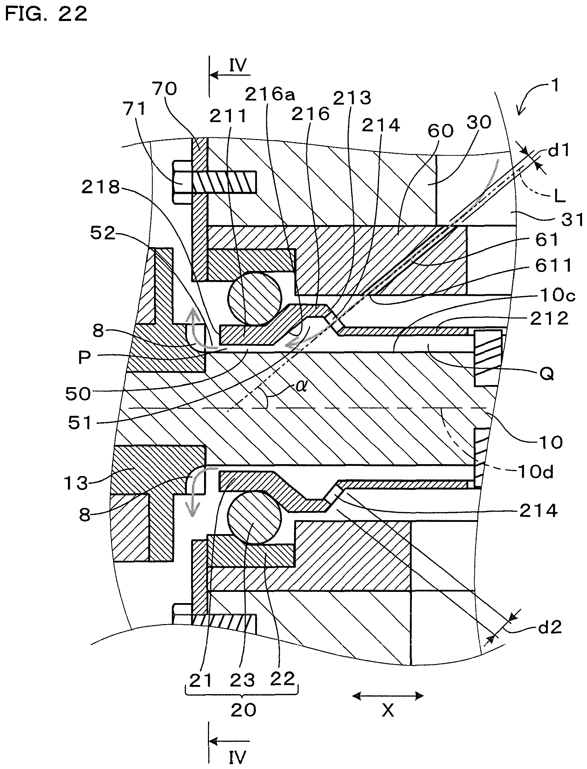

The bearing structure of a turbocharger 1 according to the present embodiment exhibits the operational effects equivalent to those of Embodiment 1 As shown in FIGs. 1 and 3, Embodiment 1 is configured to supply oil to inside of an inner ring 21 through an oil supply path 62, and an engagement-member insertion hole 215 and an oil supply hole 217 that are formed in a central area 212 of the inner ring 21 in the axial direction X. On the other hand, in addition to such a configuration, the present embodiment is configured to supply oil to the inside of the inner ring 21 mainly through the oil supply path 61 and an oil flowing hole 214. The oil supply path 61 is formed at an inclined angle so as to be close to the oil film damper 50 as approaching closer to a rotor shaft 10. The inner ring 21 is provided with the oil flowing hole 214 formed in an ejection-port opposing part 213 that opposes an oil ejection direction (indicated by an arrow in FIG. 22) at an oil ejection port 611 of the oil supply path 61. Oil ejected through the oil supply path 61 in a direction from the oil ejection port 611 to the oil film damper 50 flows into the inner ring 21 through the oil flowing hole 214 and is supplied to the oil film damper 50. As a result, oil ejected from the oil ejection port 611 is positively supplied to the oil film damper 50 and thus lubricity of oil in the oil film damper 50 is improved. Consequently, a fully sufficient damping effect can be obtained, generation of unusual noise can be prevented, and operation efficiency can be improved.

In the present embodiment, the oil supply path 61 linearly passes through the retainer 60 and a center line L of the oil supply path 61 is perpendicular to the ejection-port opposing part 213. The oil flowing hole 214 is thus open on a surface that is vertical to a direction in which oil ejected from the oil ejection port 611 flows. Accordingly, the oil ejected from the oil ejection port 611 easily flows into the oil flowing hole 214. As a result, supply of oil to the oil film damper 50 is facilitated, lubricity of oil in the oil film damper 50 is further improved, and a fully sufficient damping effect can be obtained. Moreover, generation of unusual noise can be reliably prevented and operation efficiency can be further improved.

In the present embodiment, as shown in FIG. 22, the oil flowing hole 214 is formed to be parallel to the center line L of the oil supply path 61 in a cross-section including a shaft center 10d of the rotor shaft 10 and the center line L. A direction in which oil ejected from the oil ejection port 611 flows matches a direction in which the oil flowing hole 214 is formed, and thus oil flowing into the oil flowing hole 214 easily reaches the oil film damper 50 formed inside the inner ring 21.

An angle α of the center line L of the oil supply path 61 and the shaft center 10d of the rotor shaft 10 is preferably equal to or less than 45° and more preferably equal to or less than 30°. In the present embodiment, the angle α is 30°. Such configuration enables to exhibit a wedge effect of flowing the oil ejected from the oil ejection port 611 through the oil supply path 61 toward the oil film damper 50 formed inside the inner ring 21 and positively charging the oil film damper 50, and thus lubricity of the oil in the oil film damper 50 is improved and a sufficient damping effect can be obtained. Moreover, generation of unusual noise can be reliably prevented and operation efficiency can be further improved.

In the present embodiment, the inner ring 21 is provided with a damper forming part 211 that forms the oil film damper 50 , and a storage-part forming part 216 that forms an oil storage part 51 for storing oil between the storage-part forming part 216 and an outer peripheral surface 10c of the rotor shaft 50. The storage-part forming part is formed between the damper forming part 211 and the ejection-port opposing part 213. A wall surface 216a of the storage-part forming part 216 on a side of the damper forming part 211 is formed to be parallel to the center line L in a cross-section including the shaft center 10d of the rotor shaft 10 and the center line L of the oil supply path 61. Such configuration enables to store the oil that is supplied to the oil film damper 50 through the oil flowing hole 214 and to supply the oil stored in the oil storage part 51 to the oil film damper 50 along the wall surface 216a on the side of the damper forming part 211 using oil flowing into the oil storage part 51 through the oil flowing hole 214. The oil stored in the oil storage part 51 can be positively supplied to the oil film damper 50 by the wedge effect described above, and thus a sufficient damping effect can be obtained in the oil film damper 50, generation of unusual noise can be reliably prevented, and operation efficiency can be further improved.

According to the present embodiment, the inner ring 21 is provided with a discharge-part forming part 218 formed on the damper forming part 211 on a side opposite to the oil storage part 61, the discharge-part forming part 218 forming an oil discharge part 52 for discharging. Further, an oil slinger 8 is provided at a position opposite to the oil discharge part 52 so as to scatter oil discharged from the oil discharge part 52, radially outside of the rotor shaft 10. Such configuration enables to easily discharge oil supplied to the oil film damper 50 from the oil film damper 50 through the oil discharge part 52 and the oil slinger 8, and to facilitate circulation of oil in the housing 30 is facilitated. The dischargeability of oil to be discharged from the oil film damper 50 can be improved and the suppliability of oil to be supplied to the oil film damper 50 can also be improved. As a result, the oil is prevented from being filled in the housing 30 and leaking outside of the housing 30.

According to the present embodiment, the retainer 60 is provided with the auxiliary oil supply path 62 and the inner ring 21 is provided with the auxiliary oil supply hole 217 to supply oil from the central area 212 to inside the inner ring 21. In the event that oil can be sufficiently supplied to the oil film damper 50 through the oil supply path 61 and the oil flowing hole 214, however, the auxiliary oil supply path 62 and the auxiliary oil supply hole 217 need not be provided.

As described above, according to the present embodiment, it is possible to provide the bearing structure of a turbocharger 1 that can prevent generation of unusual noise, improve operation efficiency, and reduce manufacturing costs.

## Claims

1. A bearing structure of a turbocharger, the bearing structure comprising:
a rotor shaft that includes a turbine impeller mounted on a first end thereof and a compressor impeller mounted on a second end thereof;
a ball bearing that includes an inner ring and an outer ring that are supported in relatively rotatable manner;
a retainer that holds the outer ring;
a housing that houses the rotor shaft, the ball bearing, and the retainer, and
an oil film damper that is formed of oil in a film state and is interposed between the inner ring and an outer peripheral surface of the rotor shaft.

2. The bearing structure according to claim 1, wherein the inner ring engages with the rotor shaft via an engagement member.

3. The bearing structure according to claim 1 or 2, wherein the inner ring includes an oil supply hole formed as a through-hole, through which at least a part of the oil is supplied to the oil film damper.

4. The bearing structure according to claim 1, wherein
the inner ring is formed in a cylindrical shape extending along an axial direction of the rotor shaft,
the rotor shaft is provided with an end-part opposing part that is opposed to an axial-direction end part of the inner ring in an axial direction, and
a first one of the axial-direction end part and the end-part opposing part has a protrusion that protrudes toward a second one of the axial-direction end part and the end-part opposing part, and the second one has an engagement part that engages with the protrusion.

5. The bearing structure according to claim 4, wherein the end-part opposing part includes a turbine-side end-part opposing part opposed to the axial-direction end part on a side of a turbine impeller and a compressor-side end-part opposing part opposed to the axial-direction end part on a side of a compressor impeller, the turbine-side end-part opposing part is formed in a joining part of the rotor shaft to be joined with the turbine impeller, and the compressor-side end-part opposing part is formed in a collar provided on the side of the compressor impeller.

6. The bearing structure according to claim 5, wherein at least one of the joining part and the collar is provided with a plurality of oil slingers formed in a recessed shape so as to radially outwardly scatter oil flowing out of the oil film damper, and the protrusion engages with the oil slinger in at least one of the oil slingers to constitute the engagement part.

7. The bearing structure according to claim 4, wherein the rotor shaft includes a large diameter part formed on the side of the turbine shaft, a small diameter part formed on the side of the compressor impeller and having a diameter smaller than that of the large diameter part, and a stepped part formed between the large diameter part and the small diameter part, and is provided with an annular member into which the small diameter part is inserted, the annular member being interposed between the stepped part and the collar provided on the side of the compressor impeller and having the end-part opposing part formed at a position on the side of the compressor.

8. The bearing structure according to claim 1, wherein the inner ring is configured to rotate with rotation of the rotor shaft via the oil film damper.

9. The bearing structure according to claim 8, wherein
the inner ring is formed in a cylindrical shape extending along an axial direction of the rotor shaft,
the rotor shaft is provided with an end-part opposing part that is opposed to an axial-direction end part of the inner ring in an axial direction, and
at least one of the axial-direction end part and the end-part opposing part is provided with an oil discharge groove formed by cutting away so as to discharge oil discharged from the oil film damper.

10. The bearing structure according to any one of claims 1 to 9, wherein
the retainer includes an oil supply path for flowing the oil, which is formed at an inclined angle and is closer to the oil film damper as approaching closer to the rotor shaft, the oil supply path including an oil ejection port at an end part on a side of the inner ring, from which oil flowing in the oil supply path is ejected toward the inner ring; and
the inner ring is formed in a cylindrical shape and includes an ejection-port opposing part opposed to an ejection direction of oil to be ejected from the oil ejection port, the ejection-port opposing part having an oil flowing hole formed to flow oil ejected from the oil ejection port into an inside of the inner ring and supply the oil film damper with the oil.

11. The bearing structure according to claim 10, wherein the oil supply path passes through the retainer straightway and a center line of the oil supply path is perpendicular to the ejection-port opposing part.

12. The bearing structure according to claim 11, wherein an angle between the center line of the oil supply path and a shaft center of the rotor shaft is equal to or less than 45°.

13. The bearing structure according to claim 11 or 12, wherein the inner ring is provided with a damper forming part that forms the oil film damper, and a storage-part forming part that forms an oil storage part for storing oil between the storage-part forming part and an outer peripheral surface of the rotor shaft, the storage-part forming part being formed between the damper forming part and the ejection-port opposing part, and a wall surface of the storage-part forming part on a side of the damper forming part is formed to be parallel to the center line of the oil supply path in a cross-section including the shaft center of the rotor shaft and the center line.

14. The bearing structure according to claim 13, wherein the inner ring includes a discharge-part forming part formed on the damper forming part on a side opposite to the oil storage part, the discharge-part forming part forming an oil discharge part for discharging oil supplied to the oil film damper, and an oil slinger is provided at a position opposite to the oil discharge part and scatters oil discharged from the oil discharge part, radially outside of the rotor shaft.
